# EUROPEAN PATENT SPECIFICATION

(11) **EP 3 585 000 B1**
(45) Date of publication and mention of the grant of the patent: **13.01.2021**
(21) Application number: 19179889.1
(22) Date of filing: 13.06.2019
(51) Int. Cl.: H04L 12/24, H04L 12/26

(54) **SYSTEMS AND METHODS FOR INTERACTIVE FILTERING OF CONFIGURATION MANAGEMENT DATABASE (CMDB) DATA**
SYSTEME UND VERFAHREN ZUR INTERAKTIVEN FILTERUNG VON KONFIGURATIONSMANAGEMENTDATENBANK(CMDB)-DATEN
SYSTÈMES ET PROCÉDÉS DE FILTRAGE INTERACTIVE DE DONNÉES DE BASE DE DONNÉES DE GESTION DE CONFIGURATION (CMDB)

(30) Priority: 19.06.2018 US 201816012472
(43) Date of publication of application: 25.12.2019
(73) Proprietor: ServiceNow, Inc., Santa Clara, California 95054 (US)
(72) Inventor: WADE, Aaron Anthony, Santa Clara, California 95054 (US); ROUNDS, Jordan Jon, Santa Clara, California 95054 (US); LUDDY, Frederic B., Santa Clara, California 95054 (US)
(74) Representative: Boult Wade Tennant LLP

(56) References cited:
- EP-A1- 1 577 792
- US-A1- 2012 023 449
- US-B1- 6 941 359

## Description

### BACKGROUND

The present disclosure relates generally to graphical user interfaces (GUIs), and more specifically, to GUIs of a configuration management database (CMDB) platform.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Cloud computing relates to the sharing of computing resources that are generally accessed via the Internet. In particular, a cloud computing infrastructure allows users, such as individuals and/or enterprises, to access a shared pool of computing resources, such as servers, storage devices, networks, applications, and/or other computing based services. By doing so, users are able to access computing resources on demand that are located at remote locations, which resources may be used to perform a variety computing functions (e.g., storing and/or processing large quantities of computing data). For enterprise and other organization users, cloud computing provides flexibility in accessing cloud computing resources without accruing large up-front costs, such as purchasing expensive network equipment or investing large amounts of time in establishing a private network infrastructure. Instead, by utilizing cloud computing resources, users are able redirect their resources to focus on their enterprise's core functions.

In modern communication networks, examples of cloud computing services a user may utilize include so-called infrastructure as a service (IaaS), software as a service (SaaS), and platform as a service (PaaS) technologies. IaaS is a model in which providers abstract away the complexity of hardware infrastructure and provide rapid, simplified provisioning of virtual servers and storage, giving enterprises access to computing capacity on demand. In such an approach, however, a user may be left to install and maintain platform components and applications. SaaS is a delivery model that provides software as a service rather than an end product. Instead of utilizing a local network or individual software installations, software is typically licensed on a subscription basis, hosted on a remote machine, and accessed by client customers as needed. For example, users are generally able to access a variety of enterprise and/or information technology (IT)-related software via a web browser. PaaS acts an extension of SaaS that goes beyond providing software services by offering customizability and expandability features to meet a user's needs. For example, PaaS can provide a cloud-based developmental platform for users to develop, modify, and/or customize applications and/or automating enterprise operations without maintaining network infrastructure and/or allocating computing resources normally associated with these functions.

Within the context of cloud computing solutions for CMDBs, users may be asked to deal with ever increasing amounts of data, such as with respect to the number of Configuration Items (CIs) stored in the CMDB (including such CIs' relevant metadata, such as manufacturer, vendor, location, and so forth), as well as the alerts, service metrics, and maintenance status information related to such CIs. In fact, the amount of data collected and stored in today's cloud computing solutions, such as CMDBs, may be orders of magnitude greater than what was historically collected and stored. Users tasked with automating and/or troubleshooting enterprise, IT, and/or other organization-related functions (e.g., incident tracking and/or help desk-related functions) navigate ever increasing amounts of data to properly and efficiently perform their job functions.

With this in mind, CMDB data is often filtered before being presented to users, such that only a limited, desired portion of the data is retrieved and presented. For example, a CMDB may include a query that filters (e.g., only selects) CMDB records that pertain to a particular CI or user. However, to design such a query, the user generally need knowledge regarding the underlying structure of the CMDB and/or experience using a suitable query language. As such, queries are generally designed by developers based on client needs, which can delay a user from being able to create a filter or query on-demand. Additionally, such queries are generally designed by the developer as a textual string, which is not intuitive or interactive.

US patent application publication no. US2012/023449 describes a system and method for an interactive filter. The system includes a data storage device, a display device, a user interface input device, and a processor. The data storage device stores data. The display device displays an initial representation of the data. The user interface input device facilitates a localized selection of a portion of the initial representation displayed on the display device. The localized selection is determined by hovering a navigation icon in alignment with a selection area corresponding to the portion of the initial representation. The processor dynamically applies a filter parameter to the portion of the initial representation based on the localized selection from the user interface input device.

### SUMMARY

In accordance with different aspects, there are provided a computing system, a method of operating a graphical user interface associated with a configuration management database, and a non-transitory, computer-readable medium, as recited in the accompanying claims.

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Present embodiments are directed to a graphical user interface (GUI) associated with a configuration management database (CMDB). For example, the GUI may be hosted and executed by a computing system associated with a client instance and may provide a number of different features for viewing CMDB data and constructing filters for the CMDB data. The disclosed GUI enables a user to select, drag, and drop various portions of a table (e.g., a column heading or field value) into a filter section of the GUI to visually and intuitively construct a filter. For certain column headings, such as a heading of a column storing numerical values (e.g., request durations), the disclosed GUI generates a graphical representation in the filter section that illustrates changes to the value over time, and that enables the user to provide further input to visually set numerical limits for the filter. Additionally, the disclosed system enables the generation of a widget based on the filter, and the widget can be placed on a launcher GUI to enable users to quickly and easily access data and visualize trends in CMDB data. As such, the disclosed system enables users to more easily gain meaningful intelligence regarding issues on the client network from the vast quantity of CMDB data in order to rapidly identify and address client issues.

In an example, a system includes a GUI that presents a data set from the CMDB on a table having a number of columns. Each column of the table includes a column heading and a number of fields, each field displaying a respective value for a respective record of the data set. The system is configured to: receive a selection input of a particular field of a particular row of the table or a particular column heading of a particular column from the table of the GUI, and then receive a drag input and a drop input indicative of the particular field or the particular column heading being dragged and dropped into a filter section of the GUI. In response to the drop input, the system is configured to generate a filtered data set based on a value of the particular field or the particular column heading, and present the filtered data set on the table of the GUI.

### BRIEF DESCRIPTION OF THE DRAWINGS

Various aspects of this disclosure may be better understood upon reading the following detailed description and upon reference to the drawings in which:
FIG. 1 is a block diagram of an embodiment of a cloud computing system in which embodiments of the present disclosure may operate;
FIG. 2 is a block diagram of an embodiment of a multi-instance cloud architecture in which embodiments of the present disclosure may operate;
FIG. 3 is a block diagram of a computing device utilized in a computing system that may be present in FIGS. 1 or 2, in accordance with aspects of the present disclosure;
FIGS. 4, 5, 6, 7, 8, 9, 10, 11, 12, and 13 are simulated screenshots of an example graphical user interface (GUI) that enables interactive filtering of CMDB data, in accordance with present embodiments;
FIGS. 14, 15, 16, 17, 18, 19, 20, 21, 22, 23, 24, and 25 illustrate another example GUI that enables interactive filtering of CMDB data, in accordance with embodiments of the present technique; and
FIGS. 26, 27, and 28 illustrate an example of a launcher GUI including a filter widget, in accordance with embodiments of the present approach.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

As used herein, the term "computing system" refers to an electronic computing device such as, but not limited to, a single computer, virtual machine, virtual container, host, server, laptop, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include nonvolatile secondary storage, read-only memory (ROM), and/or random-access memory (RAM). As used herein, the term "application" refers to one or more computing modules, programs, processes, workloads, threads and/or a set of computing instructions executed by a computing system. Example embodiments of an application include software modules, software objects, software instances and/or other types of executable code. As used herein, the term "software platform" or "platform" refers to a collection of applications executed by a computing system to support one or more clients. As used herein, the term "graphical user interface" or "GUI" refers to instructions that are executed by a processor of a computing system to visually present information to a user via a display device (e.g., a monitor) and to receive inputs from the user via one or more input devices (e.g., a mouse, a keyboard). As used herein, the term "widget" refers to a user interface element of a GUI that operate as a small, self-contained application within the GUI. As such, a widget may be associated with instructions that are executed by a processor of a computing system to present data (e.g., a graph) to the user, and to update the graph based on changes to data underlying the graph. Additionally, certain widgets can be configured by users to provide customized functionality that can be saved for later access and/or transferred to other users.

As set forth above, CMDBs often include a massive amount of data that users want to manage in an efficient manner to quickly identify and resolve issues on a client network. Users can design filters to view only particular CMDB data in order to identify an issue, however, this typically requires the user to have a working knowledge of query languages and/or the underlying structure of CMDB tables. That is, prior to the present disclosure, there is not a graphical user interface (GUI) that enables a user lacking such expertise to quickly and easily design filters as needed.

With the foregoing in mind, present embodiments are directed to a GUI that is designed to enable a user to intuitively and interactively design filters for CMDB data. As described below, the disclosed GUI enables a user to select, drag, and drop various portions of a table (e.g., a column heading or field value) into a filter section of the GUI to visually construct a filter. For certain column headings, such as a heading of a column storing numerical values (e.g., request durations), the disclosed GUI generates a graphical representation in the filter section that illustrates changes to the value over time, and that enables the user to provide further input to visually set numerical limits for the filter. Additionally, the disclosed system enables the generation of a widget based on the filter, and the widget can be placed on a launcher GUI to enable users to quickly and easily access data and visualize trends in CMDB data. As such, the disclosed system enables users to more easily gain meaningful intelligence regarding issues on the client network from the vast quantity of CMDB data in order to rapidly identify and address these client issues.

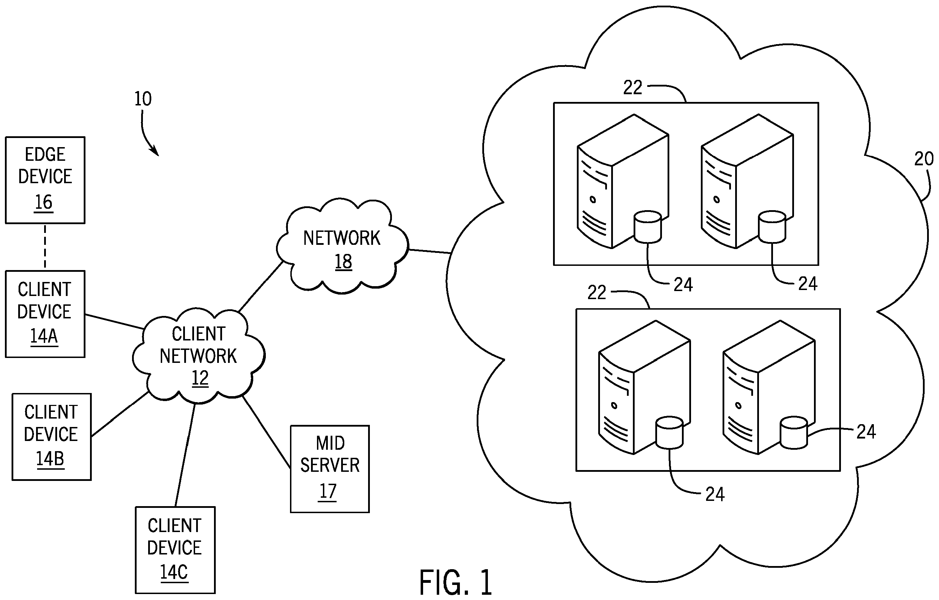

With the preceding in mind, the following figures relate to various types of generalized system architectures or configurations that may be employed to provide services to an organization in a multi-instance framework and on which the present approaches may be employed. Correspondingly, these system and platform examples may also relate to systems and platforms on which the techniques discussed herein may be implemented or otherwise utilized. Turning now to FIG. 1, a schematic diagram of an embodiment of a computing system 10, such as a cloud computing system, where embodiments of the present disclosure may operate, is illustrated. Computing system 10 may include a client network 12, network 18 (e.g., the Internet), and a cloud-based platform 20. In some implementations, the cloud-based platform may be a configuration management database (CMDB) platform. In one embodiment, the client network 12 may be a local private network, such as local area network (LAN) having a variety of network devices that include, but are not limited to, switches, servers, and routers. In another embodiment, the client network 12 represents an enterprise network that could include one or more LANs, virtual networks, data centers 22, and/or other remote networks. As shown in FIG. 1, the client network 12 is able to connect to one or more client devices 14A, 14B, and 14C so that the client devices are able to communicate with each other and/or with the network hosting the platform 20. The client devices 14A-C may be computing systems and/or other types of computing devices generally referred to as Internet of Things (IoT) devices that access cloud computing services, for example, via a web browser application or via an edge device 16 that may act as a gateway between the client devices and the platform 20. FIG. 1 also illustrates that the client network 12 includes an administration or managerial device or server, such as a management, instrumentation, and discovery (MID) server 17 that facilitates communication of data between the network hosting the platform 20, other external applications, data sources, and services, and the client network 12. Although not specifically illustrated in FIG. 1, the client network 12 may also include a connecting network device (e.g., a gateway or router) or a combination of devices that implement a customer firewall or intrusion protection system.

For the illustrated embodiment, FIG. 1 illustrates that client network 12 is coupled to a network 18. The network 18 may include one or more computing networks, such as other LANs, wide area networks (WAN), the Internet, and/or other remote networks, to transfer data between the client devices 14A-C and the network hosting the platform 20. Each of the computing networks within network 18 may contain wired and/or wireless programmable devices that operate in the electrical and/or optical domain. For example, network 18 may include wireless networks, such as cellular networks (e.g., Global System for Mobile Communications (GSM) based cellular network), IEEE 802.11 networks, and/or other suitable radio-based networks. The network 18 may also employ any number of network communication protocols, such as Transmission Control Protocol (TCP) and Internet Protocol (IP). Although not explicitly shown in FIG. 1, network 18 may include a variety of network devices, such as servers, routers, network switches, and/or other network hardware devices configured to transport data over the network 18.

In FIG. 1, the network hosting the platform 20 may be a remote network (e.g., a cloud network) that is able to communicate with the client devices 14A-C via the client network 12 and network 18. The network hosting the platform 20 provides additional computing resources to the client devices 14A-C and/or client network 12. For example, by utilizing the network hosting the platform 20, users of client devices 14A-C are able to build and execute applications for various enterprise, IT, and/or other organization-related functions. In one embodiment, the network hosting the platform 20 is implemented on one or more data centers 22, where each data center could correspond to a different geographic location. Each of the data centers 22 includes a plurality of virtual servers 24 (also referred to herein as application nodes, application servers, virtual server instances, application instances, or application server instances), where each virtual server can be implemented on a physical computing system, such as a single electronic computing device (e.g., a single physical hardware server) or across multiple-computing devices (e.g., multiple physical hardware servers). Examples of virtual servers 24 include, but are not limited to a web server (e.g., a unitary web server installation), an application server (e.g., unitary JAVA Virtual Machine), and/or a database server, e.g., a unitary relational database management system (RDBMS) catalog.

To utilize computing resources within the platform 20, network operators may choose to configure the data centers 22 using a variety of computing infrastructures. In one embodiment, one or more of the data centers 22 are configured using a multi-tenant cloud architecture, such that one of the server instances 24 handles requests from and serves multiple customers. Data centers with multi-tenant cloud architecture commingle and store data from multiple customers, where multiple customer instances are assigned to one of the virtual servers 24. In a multi-tenant cloud architecture, the particular virtual server 24 distinguishes between and segregates data and other information of the various customers. For example, a multi-tenant cloud architecture could assign a particular identifier for each customer in order to identify and segregate the data from each customer. Generally, implementing a multi-tenant cloud architecture may suffer from various drawbacks, such as a failure of a particular one of the server instances 24 causing outages for all customers allocated to the particular server instance.

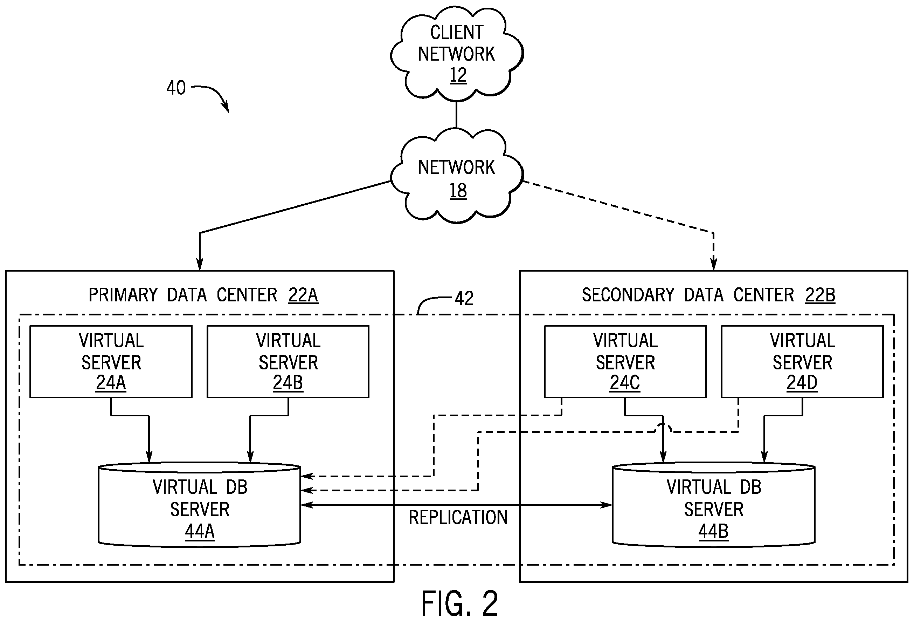

In another embodiment, one or more of the data centers 22 are configured using a multi-instance cloud architecture to provide every customer its own unique customer instance or instances. For example, a multi-instance cloud architecture could provide each customer instance with its own dedicated application server(s) and dedicated database server(s). In other examples, the multi-instance cloud architecture could deploy a single physical or virtual server and/or other combinations of physical and/or virtual servers 24, such as one or more dedicated web servers, one or more dedicated application servers, and one or more database servers, for each customer instance. In a multi-instance cloud architecture, multiple customer instances could be installed on one or more respective hardware servers, where each customer instance is allocated certain portions of the physical server resources, such as computing memory, storage, and processing power. By doing so, each customer instance has its own unique software stack that provides the benefit of data isolation, relatively less downtime for customers to access the platform 20, and customer-driven upgrade schedules. An example of implementing a customer instance within a multi-instance cloud architecture will be discussed in more detail below with reference to FIG. 2.

FIG. 2 is a schematic diagram of an embodiment of a multi-instance cloud architecture 40 where embodiments of the present disclosure may operate. FIG. 2 illustrates that the multi-instance cloud architecture 40 includes the client network 12 and the network 18 that connect to two (e.g., paired) data centers 22A and 22B that may be geographically separated from one another. Using FIG. 2 as an example, network environment and service provider cloud infrastructure client instance 42 (also referred to herein as a simply client instance 42) is associated with (e.g., supported and enabled by) dedicated virtual servers (e.g., virtual servers 24A, 24B, 24C, and 24D) and dedicated database servers (e.g., virtual database servers 44A and 44B). Stated another way, the virtual servers 24A-24D and virtual database servers 44A and 44B are not shared with other client instances and are specific to the respective client instance 42. Other embodiments of the multi-instance cloud architecture 40 could include other types of dedicated virtual servers, such as a web server. For example, the client instance 42 could be associated with (e.g., supported and enabled by) the dedicated virtual servers 24A-24D, dedicated virtual database servers 44A and 44B, and additional dedicated virtual web servers (not shown in FIG. 2).

In the depicted example, to facilitate availability of the client instance 42, the virtual servers 24A-24D and virtual database servers 44A and 44B are allocated to two different data centers 22A and 22B, where one of the data centers 22 acts as a backup data center. In reference to FIG. 2, data center 22A acts as a primary data center that includes a primary pair of virtual servers 24A and 24B and the primary virtual database server 44A associated with the client instance 42. Data center 22B acts as a secondary data center 22B to back up the primary data center 22A for the client instance 42. To back up the primary data center 22A for the client instance 42, the secondary data center 22B includes a secondary pair of virtual servers 24C and 24D and a secondary virtual database server 44B. The primary virtual database server 44A is able to replicate data to the secondary virtual database server 44B (e.g., via the network 18).

As shown in FIG. 2, the primary virtual database server 44A may back up data to the secondary virtual database server 44B using a database replication operation. The replication of data between data could be implemented by performing full backups weekly and daily incremental backups in both data centers 22A and 22B. Having both a primary data center 22A and secondary data center 22B allows data traffic that typically travels to the primary data center 22A for the client instance 42 to be diverted to the second data center 22B during a failure and/or maintenance scenario. Using FIG. 2 as an example, if the virtual servers 24A and 24B and/or primary virtual database server 44A fails and/or is under maintenance, data traffic for client instances 42 can be diverted to the secondary virtual servers 24C and/or 24D and the secondary virtual database server instance 44B for processing.

Although FIGS. 1 and 2 illustrate specific embodiments of a cloud computing system 10 and a multi-instance cloud architecture 40, respectively, the disclosure is not limited to the specific embodiments illustrated in FIGS. 1 and 2. For instance, although FIG. 1 illustrates that the platform 20 is implemented using data centers, other embodiments of the platform 20 are not limited to data centers and can utilize other types of remote network infrastructures. Moreover, other embodiments of the present disclosure may combine one or more different virtual servers into a single virtual server or, conversely, perform operations attributed to a single virtual server using multiple virtual servers. For instance, using FIG. 2 as an example, the virtual servers 24A-D and virtual database servers 44A and 44B may be combined into a single virtual server. Moreover, the present approaches may be implemented in other architectures or configurations, including, but not limited to, multi-tenant architectures, generalized client/server implementations, and/or even on a single physical processor-based device configured to perform some or all of the operations discussed herein. Similarly, though virtual servers or machines may be referenced to facilitate discussion of an implementation, physical servers may instead be employed as appropriate. The use and discussion of FIGS. 1 and 2 are only examples to facilitate ease of description and explanation and are not intended to limit the disclosure to the specific examples illustrated therein.

As may be appreciated, the respective architectures and frameworks discussed with respect to FIGS. 1 and 2 incorporate computing systems of various types (e.g., servers, workstations, client devices, laptops, tablet computers, cellular telephones, and so forth) throughout. For the sake of completeness, a brief, high level overview of components typically found in such systems is provided. As may be appreciated, the present overview is intended to merely provide a high-level, generalized view of components typical in such computing systems and should not be viewed as limiting in terms of components discussed or omitted from discussion.

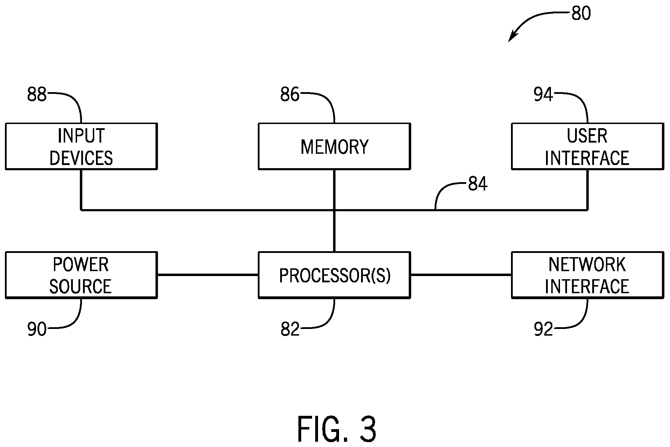

With this in mind, and by way of background, it may be appreciated that the present approach may be implemented using one or more processor-based systems such as shown in FIG. 3. Likewise, applications and/or databases utilized in the present approach stored, employed, and/or maintained on such processor-based systems. As may be appreciated, such systems as shown in FIG. 3 may be present in a distributed computing environment, a networked environment, or other multi-computer platform or architecture. Likewise, systems such as that shown in FIG. 3, may be used in supporting or communicating with one or more virtual environments or computational instances on which the present approach may be implemented.

With this in mind, an example computer system may include some or all of the computer components depicted in FIG. 3. FIG. 3 generally illustrates a block diagram of example components of a computing system 80 and their potential interconnections or communication paths, such as along one or more busses. As illustrated, the computing system 80 may include various hardware components such as, but not limited to, one or more processors 82, one or more busses 84, memory 86, input devices 88, a power source 90, a network interface 92, a user interface 94, and/or other computer components useful in performing the functions described herein.

The one or more processors 82 may include one or more microprocessors capable of performing instructions stored in the memory 86. Additionally or alternatively, the one or more processors 82 may include application-specific integrated circuits (ASICs), field-programmable gate arrays (FPGAs), and/or other devices designed to perform some or all of the functions discussed herein without calling instructions from the memory 86.

With respect to other components, the one or more busses 84 includes suitable electrical channels to provide data and/or power between the various components of the computing system 80. The memory 86 may include any tangible, non-transitory, and computer-readable storage media. Although shown as a single block in FIG. 1, the memory 86 can be implemented using multiple physical units of the same or different types in one or more physical locations. The input devices 88 correspond to structures to input data and/or commands to the one or more processor 82. For example, the input devices 88 may include a mouse, touchpad, touchscreen, keyboard and the like. The power source 90 can be any suitable source for power of the various components of the computing system 80, such as line power and/or a battery source. The network interface 92 includes one or more transceivers capable of communicating with other devices over one or more networks (e.g., a communication channel). The network interface 92 may provide a wired network interface or a wireless network interface. A user interface 94 may include a display that is configured to display text or images transferred to it from the one or more processors 82. In addition and/or alternative to the display, the user interface 94 may include other devices for interfacing with a user, such as lights (e.g., LEDs), speakers, and the like.

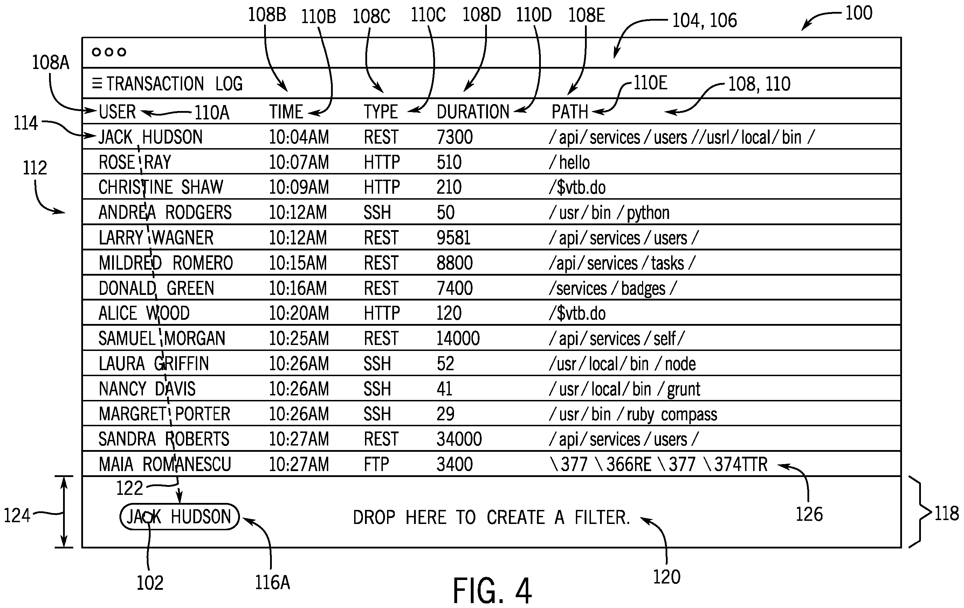

With the foregoing in mind, FIGS. 4-13 are simulated screenshots of a graphical user interface (GUI) 100 that enables interactive filtering of CMDB data, in accordance with present embodiments. The illustrated GUI may be stored and executed as instructions on any suitable computing system associated with the platform 20 (e.g., a processor associated with the data centers 22, with the client network 12, or a combination thereof) to provide the functionality described herein. In certain embodiments, some or all of the GUI 100 may be executed by one or more physical or virtual servers associated with the client instance 42, as depicted in FIG. 2. Additionally, while the example of FIGS. 4-13 is described with respect to the actions of a user that is interfacing with the GUI using a mouse input device that controls a cursor 102, in other embodiments, other suitable input devices (e.g., touchscreen devices, track pads, touch pads, stylus devices) may alternatively be used, in accordance with the present disclosure.

Each of the screenshots of the GUI in FIGS. 4-13 include a table 104 (e.g., a HyperText Markup Language (HTML) table) that is designed to present a data set 106 of CMDB data associated with a particular client network (e.g., client network 12 of FIG. 1). The table 104 includes a number of columns 108 (e.g., columns 108A, 108B, 108C, 108D, and 108E) that each represent a field of the data set. The illustrated columns 108 include respective column headers 110 (e.g., column header 110A, 110B, 110C, 110D, and 110E). The table 104 includes a number of rows 112 that each represent a record of the data set 106. As such, for the illustrated embodiment, each of the rows 112 includes a respective value for each field (e.g., for each of the columns 108A, 108B, 108C, 108D, and 108E). In certain embodiments, the table 104 may include additional rows 112 that are presented in response to scrolling the table 104 up or down. It may be appreciated that the illustrated table 104 is merely provided as an example, and in other embodiments, the table 104 may be different (e.g., include additional, fewer, or different columns 108), in accordance with the present disclosure.

In particular, FIG. 4 illustrates the GUI 100 receiving a selection input, a drag input, and a drop input with respect to a particular field 114 of the table 104. That is, FIG. 4 illustrates the GUI 100 receiving the selection input from the mouse of the user. For the illustrated example, the GUI 100 receives the selection input (e.g., an indication of a depressed mouse button) and determines the value (e.g., "Jack Hudson") stored in the particular field 114 of the table 104. In response, the GUI 100 generates and presents a first floating tag 116A that includes the determined value of the particular field 114. The floating tag 116A is generally a manipulable (e.g., draggable, droppable) user interface element that remains associated with the cursor 102, moving along with the cursor 102 according to the user's movement of the mouse while mouse button remains depressed.

For the example illustrated in FIG. 4, the GUI 100 receives a drag input and a drop input with respect to the first floating tag 116A and a filter section 118 of the GUI 100. The filter section 118 of the illustrated GUI 100 serves as a dock that is designed to receive the dropped floating tag 116A to enable the construction of a filter. While the illustrated filter section 118 is disposed in a lower portion of the GUI 100 in the illustrated embodiment, it should be appreciated that, in other embodiments, the GUI 100 may be configurable to position the filter section 118 near any other side (e.g., a left side, a right side, a top side) of the GUI 100. Additionally, the filter section 118 of the illustrated GUI 100 includes instructional text 120 (e.g., "Drop here to create a filter."). As illustrated, the first floating tag 116A is dragged, as indicated by the dashed arrow 122, from where the first floating tag 116A is initially created (e.g., directly over and in a layer above the particular field 114) and into the filter section 118 of the GUI 100 where it is dropped. In certain embodiments, the filter section 118 may initially be collapsed or have a substantially smaller height 124 to maximize the amount of the table 104 presented by the GUI 100 when a filter is not being created. For such embodiments, the filter section 118 may expand to the illustrated height in response to the selection input (e.g., in response to generating the floating tag 116A) or the drag input (e.g., in response to dragging the floating tag 116A near a bottom portion 126 of the GUI 100). Additionally, in certain embodiments, the filter section 118 of the GUI 100 may include animation features that enable the filter area to gently stretch, bounce, or pop, in response to the floating tag 116A being dragged near or into the filter section 118 of the GUI 100 to intuitively guide the user, as discussed below. It may be appreciated that, in certain embodiments, the GUI 100 may include additional visual cues to intuitively guide the user. For example, in certain embodiments, the floating tag 116A may be have a color or shape that matches a color or shape of the filter section 118, or that a color of the filter section 118 changes upon generation of the floating tag 116A to match the color or shape of the floating tag 116A.

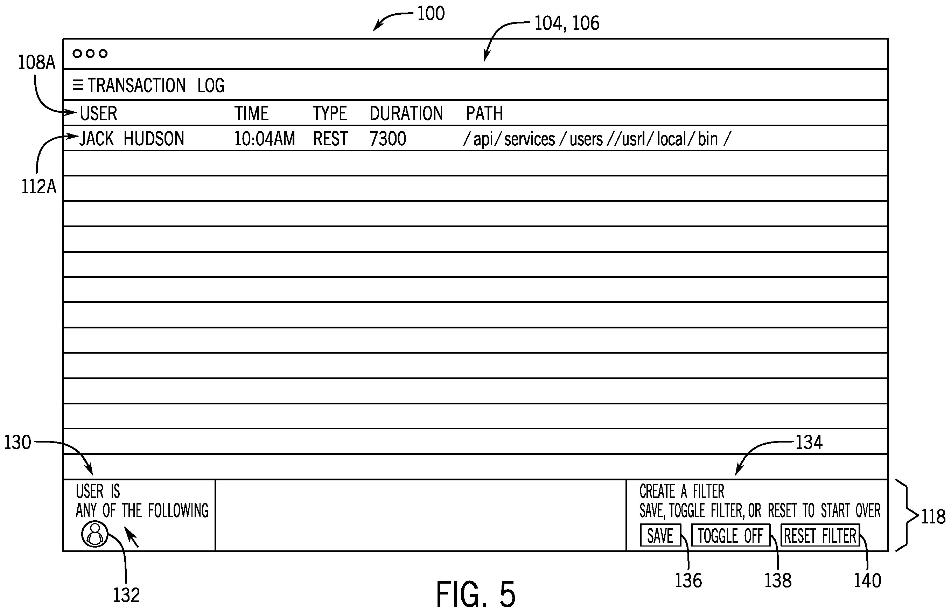

FIG. 5 illustrates the embodiment of the GUI 100 of FIG. 4 after the first floating tag 116A has been dropped in the filter section 118 of the GUI 100. For the illustrated embodiment, the filter section 118 of the GUI 100 includes a first filter portion 130 that filters (e.g., limits, restricts) the data set 106 to a particular value in the "User" column 108A. The first filter portion 130 indicates that "User is any of the following" and includes a representation (e.g., an icon 132) for "Jack Hudson," which corresponds to the value of the particular field 114 selected in FIG. 4. In other embodiments, the first filter portion 130 may include any suitable representation (e.g., full name, initials, avatar) for each user. In certain embodiments, the word "any" is emphasized to indicate that a user may click on this word to modify the filter, for example, such that the first filter portion 130 instead indicates that "User is none of the following."

The data set 106 presented in the table 104 of FIG. 5 has been filtered based on the first filter portion 130 defined in the filter section 118 of the GUI 100. That is, the first filter portion 130 indicates that the data set 106 should be filtered, such that only the record of the matching user is listed in the table 104. As such, table 104 of FIG. 5 includes only row 112A, in which the "User" field matches the selected user.

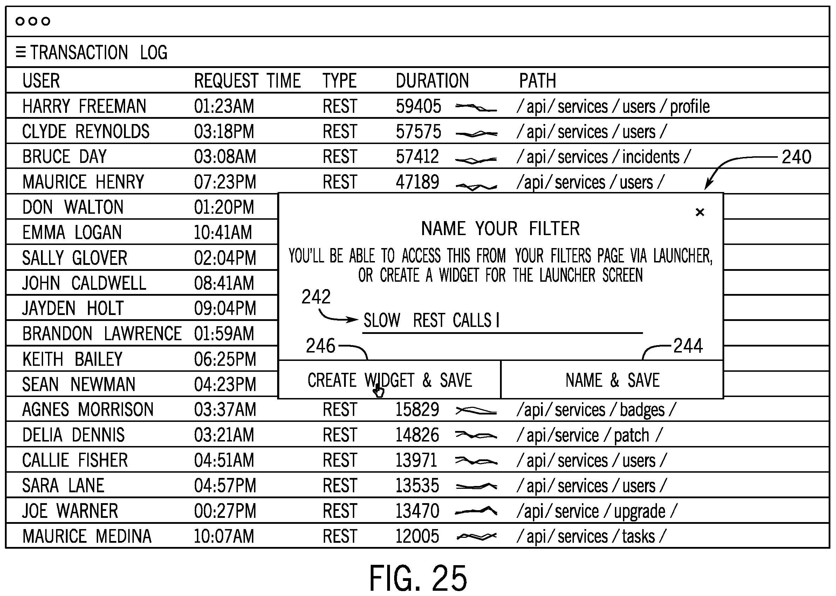

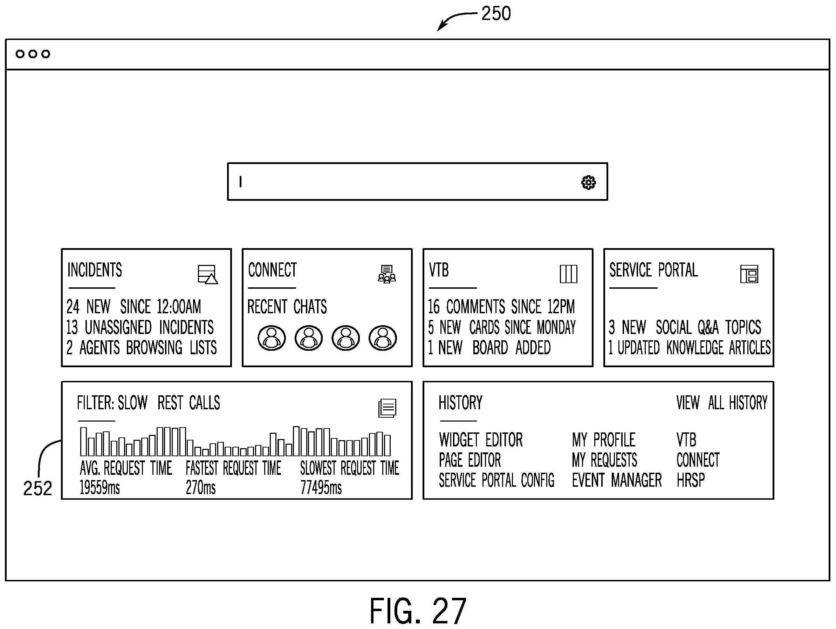

Additionally, the filter section 118 of the GUI 100 illustrated FIG. 5 includes a control portion 134, which includes instructive text, as well as a "Save" button 136, a "Toggle On/Off' button 138, and a "Reset Filter" button 140. The operation of the "Save" button 136 is discussed below with respect to FIGS. 25-28. In response to receiving input via the "Reset Filter" button 140, the GUI 100 may remove all of the filter conditions set forth in the filter section 118, and again present the entire (e.g., unfiltered) data set on the table 104, as illustrated in FIG. 4.

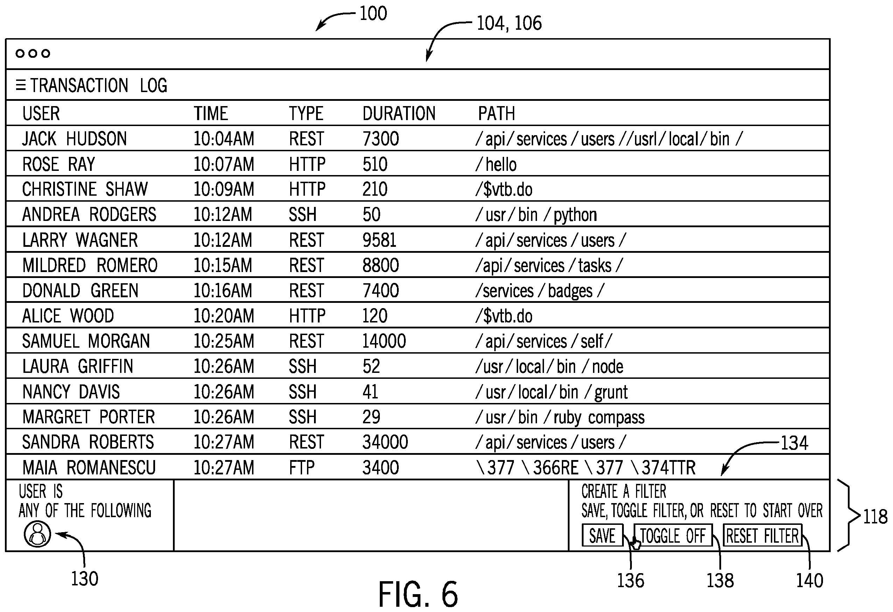

In response to receiving input via the "Toggle On/Off' button 138, the GUI 100 temporarily disables all of the filter conditions set forth in the filter section 118, which enables the user to more easily complete construction of the filter. For example, FIG. 6 illustrates the embodiment of the GUI 100 of FIG. 5 after the "Toggle On/Off' button 138 has been selected (e.g., by a mouse click of the user). Compared to FIG. 5, the appearance of the "Toggle On/Off' button 138 has been updated such that the text associated with the button reads "Toggle On" rather than "Toggle Off." Furthermore, unlike the table 104 of FIG. 5, the table 104 of FIG. 6 includes the entire data set 106, which is no longer limited to the records in which the "User" is "Jack Hudson." It may be noted that, in certain embodiments, the default behavior of the GUI 100 may be configured in a particular manner with respect to the behavior of the "Toggle On/Off' button 138. For example, in certain embodiments, the "Toggle On/Off' button 138 may be toggled on by default, while in other embodiments, it may be toggled off by default. As such, in certain embodiments, the filter being created may be on by default, resulting in an immediate update of the table 104, while in other embodiments, the filter being created may be off by default, resulting in no update of table 104 until the "Toggle On/Off' button 138 is properly selected.

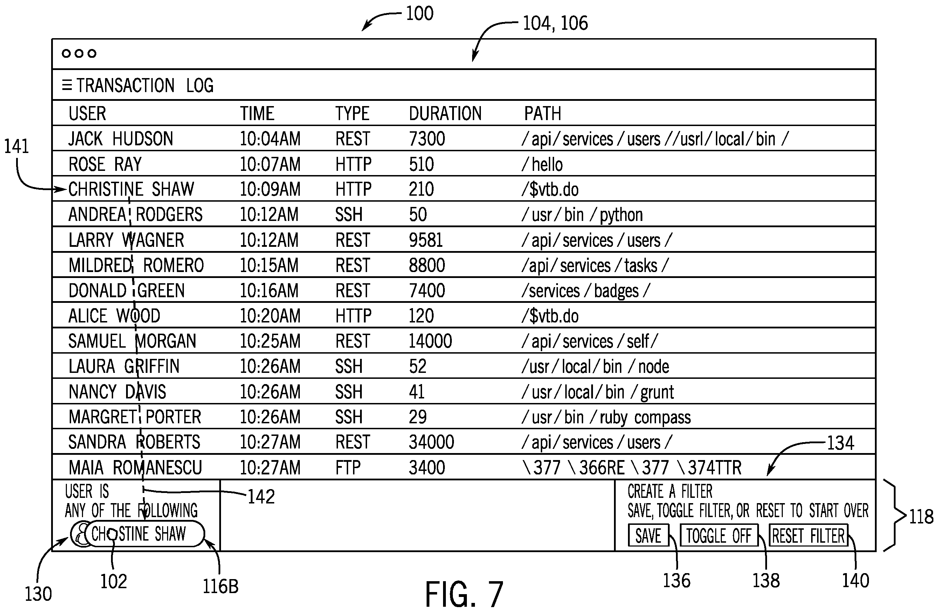

FIG. 7 illustrates the embodiment of the GUI 100 of FIG. 6 receiving another selection input, drag input, and drop input with respect to a second particular field 141 of the table 104. For the illustrated example, the GUI 100 receives the selection input (e.g., an indication of a depressed mouse button) and determines the value (e.g., "Christine Shaw") stored in the second particular field 141 of the table 104. In response, the GUI 100 creates a second floating tag 116B that presents the determined value of the particular field 141. Like the first floating tag 116A, the second floating tag 116B generally moves along with the cursor 102 according to the user's movement of the mouse while mouse button remains depressed. For the example illustrated in FIG. 7, the GUI 100 receives a drag input and a drop input with respect to the second floating tag 116B. As illustrated, the second floating tag 116B is dragged, as indicated by the dashed arrow 142, from where the floating tag 116B is initially created (e.g., directly over and in a layer above the particular field 141) and into the filter section 118 of the GUI 100 where it is dropped. However, it may be appreciated that since the "Toggle On/Off' button 138 remains in off, the filter being constructed is not applied to the data set 106, and, as such, the presentation of the table 104 remains unchanged.

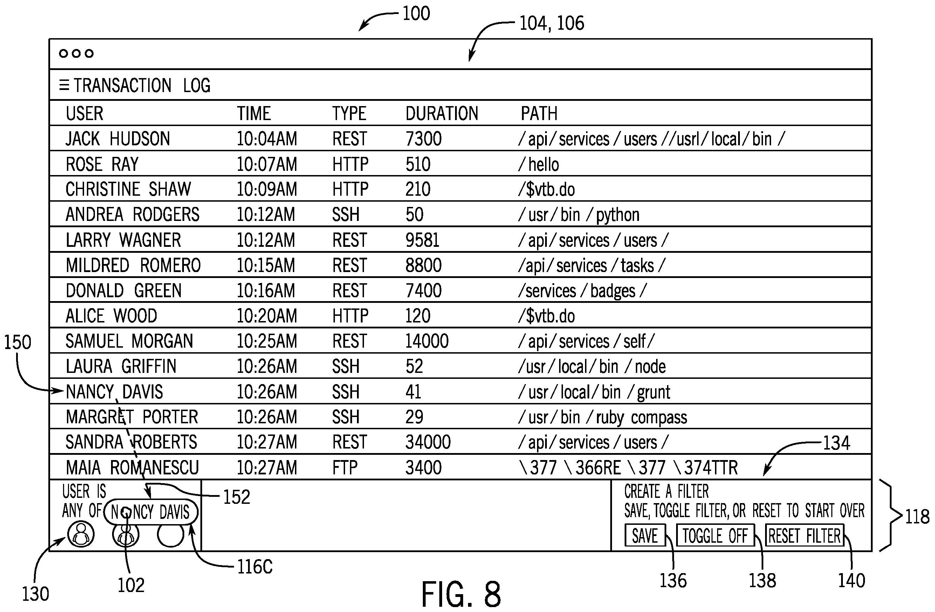

FIG. 8 illustrates the embodiment of the GUI 100 of FIG. 7 receiving another selection input, drag input, and drop input with respect to a third particular field 150 of the table 104. For the illustrated example, the GUI 100 receives the selection input (e.g., an indication of a depressed mouse button) and determines the value (e.g., "Nancy Davis") stored in the third particular field 150 of the table 104. In response, the GUI 100 creates a third floating tag 116C that presents the determined value of the particular field 150. Like the first and second floating tags 116A and 116B, the third floating tag 116C generally moves along with the cursor 102 according to the user's movement of the mouse while mouse button remains depressed. For the example illustrated in FIG. 8, the GUI 100 receives a drag input and a drop input with respect to the third floating tag 116C. As illustrated, the third floating tag 116C is dragged, as indicated by the dashed arrow 152, from where the floating tag 116C is initially created (e.g., directly over and in a layer above the particular field 150) and into the filter section 118 of the GUI 100 where it is dropped. Again, it may be appreciated that since the "Toggle On/Off' button 138 remains in toggled off, the filter being constructed is not applied to the data set 106, and the presentation of the table 104 remains unchanged. It may be appreciated the filter section 118 may be configured to handle data overflow situations that can occur, for example, when the user selects more users that can be clearly displayed in the first filter portion 130. In such situations, the first filter section 118 may display as many users as can clearly be displayed in the first filter portion 130 along with an indication (e.g., "+10") that there are a particular number of additional users that are part of the filter that are not currently being displayed.

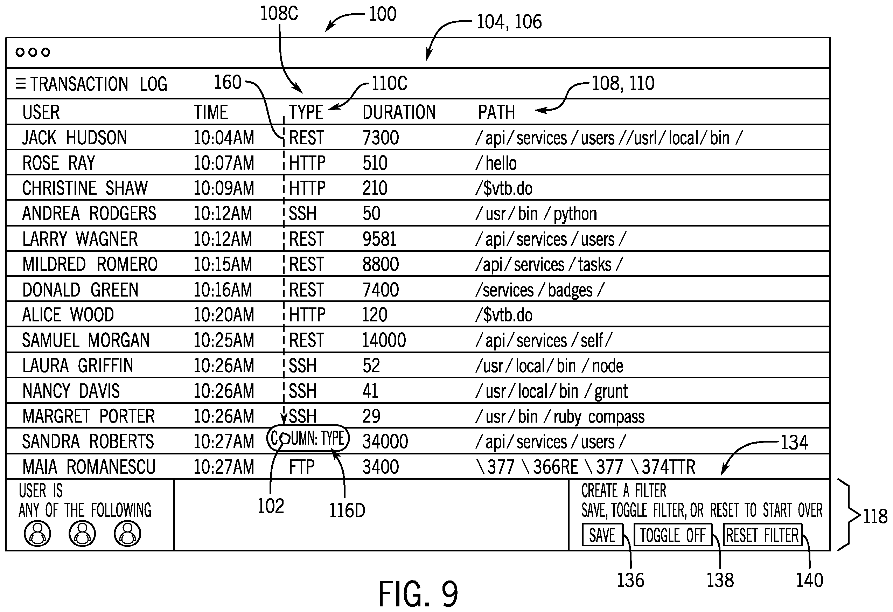

FIG. 9 illustrates the embodiment of the GUI 100 of FIG. 8 receiving a selection input, drag input, and drop input with respect to one of the column headers 110C of the table 104. For the illustrated example, the GUI 100 receives the selection input (e.g., an indication of a depressed mouse button) and determines a value (e.g., "Column:Type") of the column header 1 10C based on the selection. In response, the GUI 100 creates a fourth floating tag 116D that presents the determined value of the column header 110C. The fourth floating tag 116D generally moves along with the cursor 102 according to the user's movement of the mouse while mouse button remains depressed. For the example illustrated in FIG. 9, the GUI 100 receives a drag input and a drop input with respect to the fourth floating tag 116D. As illustrated, the fourth floating tag 116 is dragged, as indicated by the dashed arrow 160, from where the fourth floating tag 116D was initially created (e.g., directly over and in a layer above the column header 110C) and into the filter section 118 of the GUI 100 where it is dropped. Again, it may be appreciated that since the "Toggle On/Off' button 138 remains toggled off, the filter being constructed is not applied to the data set and the presentation of the table 104 remains unchanged when the fourth floating tag 116D is dropped into the filter section 118 of the GUI 100.

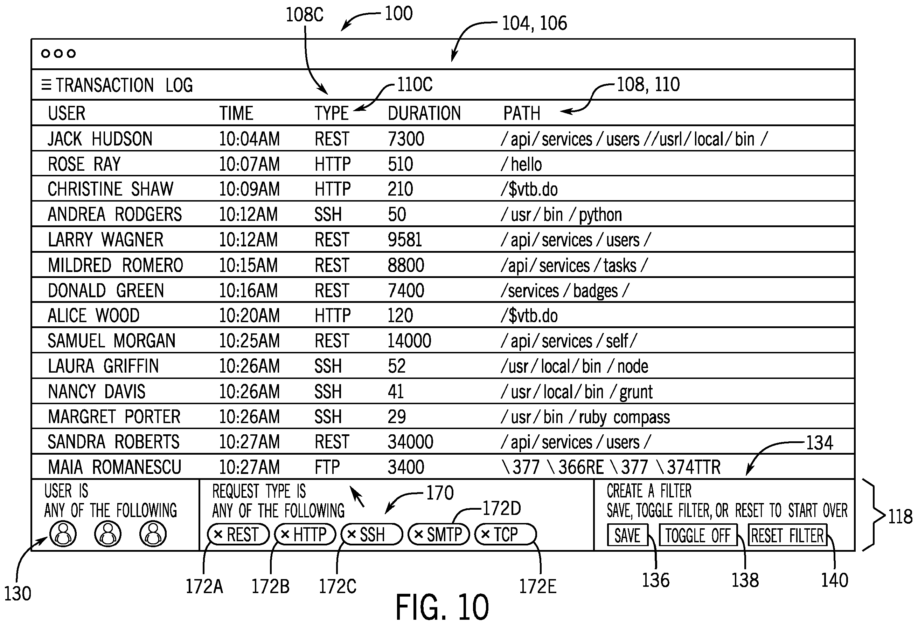

FIG. 10 illustrates the embodiment of the GUI 100 of FIG. 9 after the fourth floating tag 116D is dropped in the filter section 118 of the GUI 100. For the illustrated example, the GUI 100 determines that the column 108C associated with the column header 110C only includes a limited number of possible values (e.g., "REST", "HTTP", "SSH", "SMTP", or "TCP"). As such, the filter section 118 of the illustrated GUI 100 includes a second filter portion 170 having respective icons 172 for each of these possible values (e.g., "REST" icon 172A, "HTTP" icon 172D, "SSH" icon 172C, "SMTP" icon 172D, and "TCP" icon 172E). As such, the second filter portion 170 limits the value in the "Type" field associated with the "Type" column 108C to be any of the types indicated by these icons. As illustrated, each of the icons 172A-E include a respective "X" (e.g., a remove filter button or feature) that, when selected, removes the indicated request types from the second filter portion 170 of the filter section 118 and from the filter being created.

It may be appreciated that, in certain embodiments, the GUI 100 is configurable to present data within the table 104 and/or the filter section 118 in different manners, for example, based on a predetermined presentation format governed by a design system associated with the client instance 42. For example, in certain embodiments, the first filter portion 130 may be configurable such that each selected user is presented as an avatar, as a set of initials, as a first and last name, or any other suitable presentation that provides the desired level of information while conserving screen real estate to a desired degree. Additionally, in certain embodiments, certain fields (e.g., fields in the "Request Type" column 108C) may be presented as different input types, as governed by the design system associated with the client instance 42. For example, in certain embodiments, the icons 172 may vary in appearance (e.g., color, size, shape) in accordance with an underlying input type of selected fields.

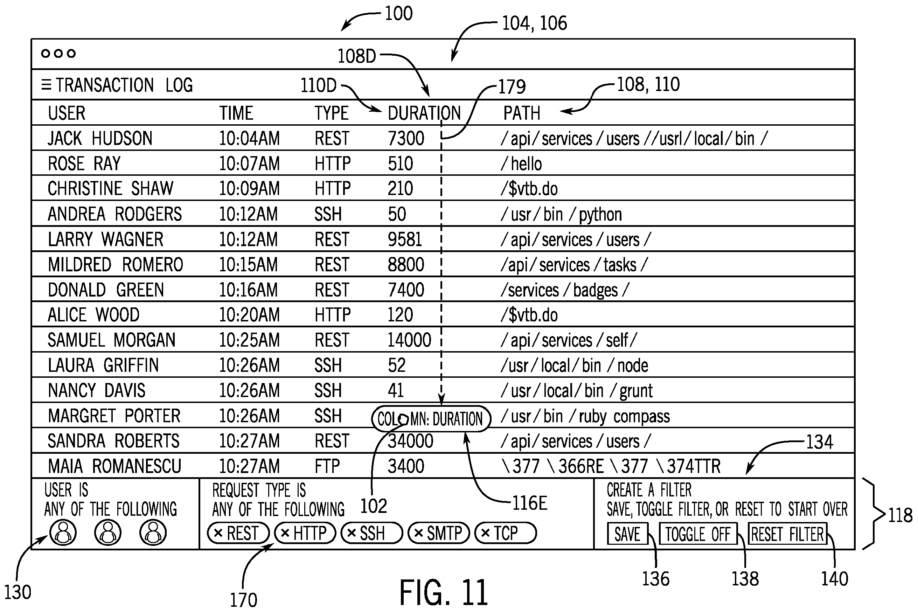

FIG. 11 illustrates the embodiment of the GUI 100 of FIG. 10 receiving a selection input, drag input, and drop input with respect to one of the column headers 110 of the table 104. For the illustrated example, the GUI 100 receives the selection input (e.g., an indication of a depressed mouse button) and determines a value of the column header 110D (e.g., "Column:Duration") based on the selection. In response, the GUI 100 creates a fifth floating tag 116E that presents the determined value of the column header 110D. The fifth floating tag 116E generally moves along with the cursor 102 according to the user's movement of the mouse while mouse button remains depressed. For the example illustrated in FIG. 11, the GUI 100 receives a drag input and a drop input with respect to the fifth floating tag 116E. As illustrated, the fifth floating tag 116E is dragged, as indicated by the dashed arrow 179, from where the fourth floating tag 116E was initially created (e.g., directly over and in a layer above the column header 110D) into the filter section 118 of the GUI 100, where it is dropped.

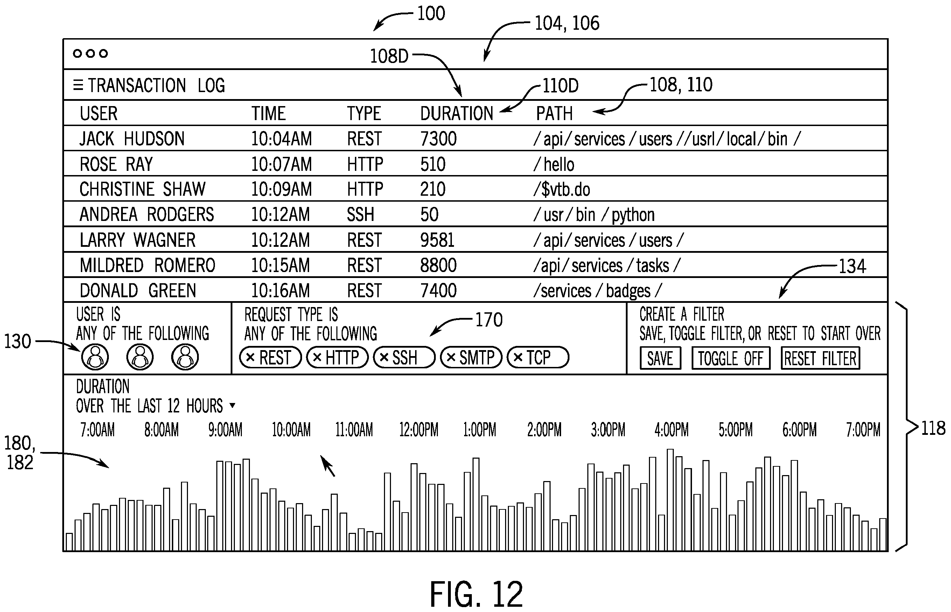

FIG. 12 illustrates the embodiment of the GUI 100 of FIG. 11 after receiving the selection input, drag input, and drop input with respect to the "Duration" column header 110D of the table 104. As illustrated, the filter section 118 of the GUI 100 has further expanded to include a third filter portion 180, which includes a graphical representation 182 of data present within the "Duration" column 108D of the table 104. That is, when a column header is selected, dragged, and dropped for a column that stores numeric data (e.g., the "Duration" column 108D), the GUI 100 may generate a graphical representation to efficiently present the values present in the selected column to the user for continued construction of the filter. For the illustrated embodiment, the graphical representation 182 is a bar graph that indicates the various values in the "Duration" column over a predetermined time window (e.g., 24 hours) that also meet the other limitations indicated in the filter section 118 (e.g., the user limitation indicated in first filter portion 130, and the type limitation indicated in second filter portion 170. In the illustrated embodiment, the GUI 100 is trained to map the "Duration" column 108D to the "Request Time" column 108B to generate the graphical representation 182. In certain embodiments, this mapping may be achieved by an administrator, architect, or machine learning agent flagging previously specific fields that should be associated with one another when the graphical representation 182 is generated. In certain embodiments, an administrator, architect, or machine learning agent may associate particular types of graphs (e.g., bar graph, line graph, pie chart) with particular fields to ensure that the graphical representation 182 is suitable for the data being presented.

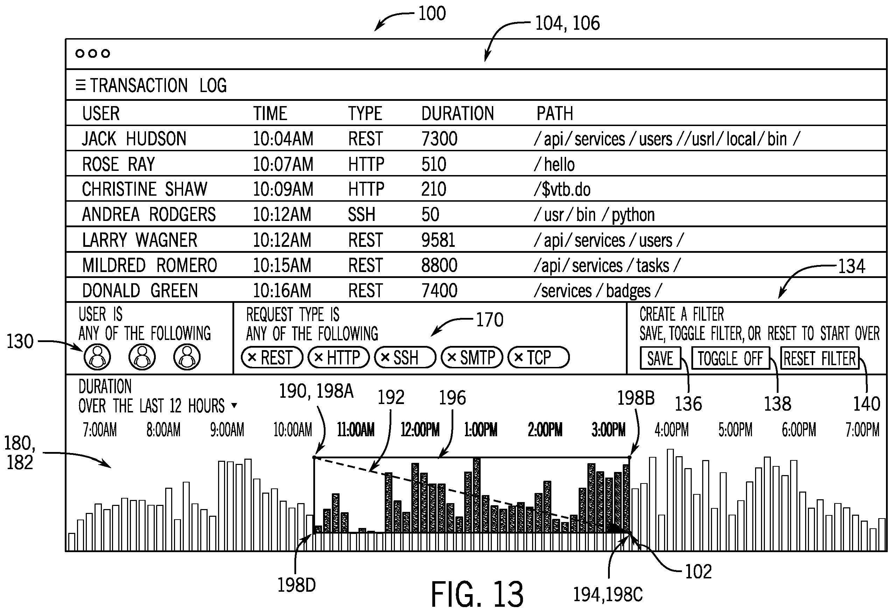

Additionally, the graphical representation 182 is designed to receive inputs to enable the addition of numerical limits (e.g., time and/or duration limitations) to the filter being constructed. For example, FIG. 13 illustrates the embodiment of the GUI 100 of FIG. 12 receiving a start selection input 190 (e.g., a mouse button being pressed), a drag input (e.g., a movement of the mouse with the button depressed, as indicated by the arrow 192), and an end selection input 194 (e.g., a release of the mouse button). This operation defines a rectangle 196 having corners 198 (e.g., corner 198A, 198B, 198C, and 198D) whose (x, y) coordinates establish the limits for the filter. For the illustrated example, the rectangle 196 includes corner 198A having coordinates (11 AM, 24000 milliseconds (ms)) and corner 198C having coordinates (3 PM, 3000 ms), and this information is combined to add a limitation to the filter, such that returned records are associated with a time between 11AM and 3PM and fall into a duration of between 3000 ms and 24000 ms.

In certain embodiments, once the graphical representation 182 of the filter section 118 has received the end selection input 194, the GUI 100 may update the graphical representation 182 to zoom in on the portion indicated by the rectangle 196. At the conclusion of this process, the GUI 100 may receive user input via the "Toggle On/Off' button 138, and then update the table 104 to reflect only the portion of the data set that meets the limitations indicated in the first filter portion 130, the second filter portion 170, and the third filter portion 180. Additionally, the GUI 100 may receive input via the "Save" button 136 to save the filter and/or to generate a widget based on the filter, as discussed in greater detail for the example below.

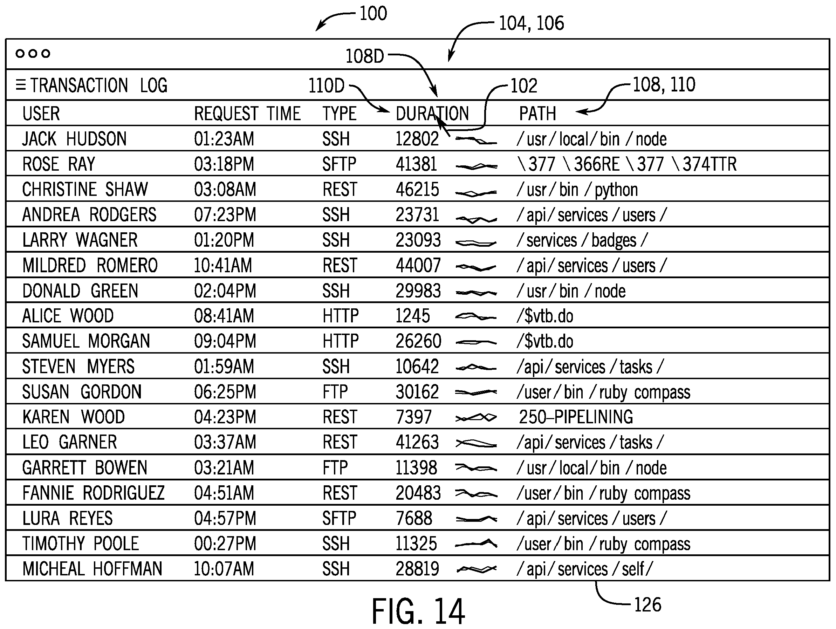

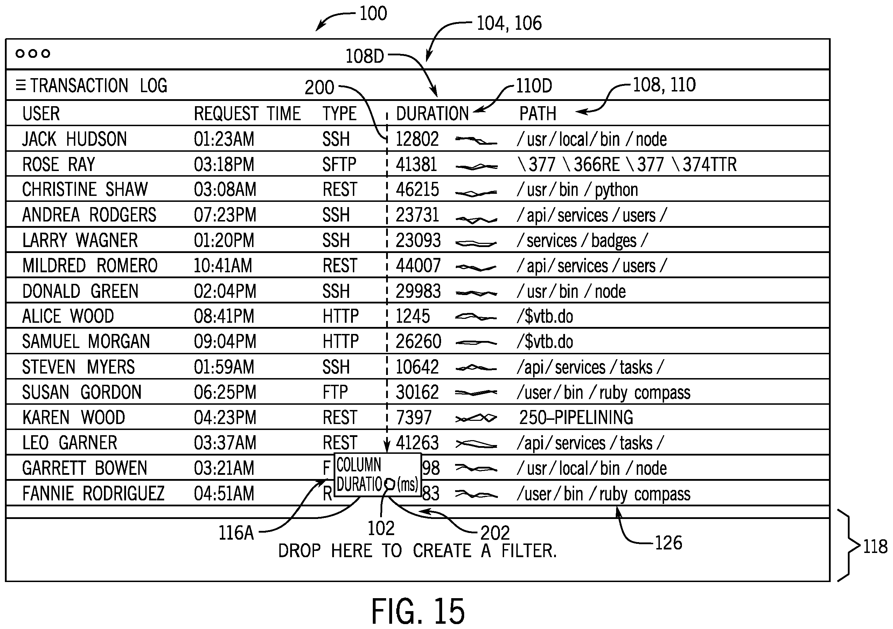

FIGS. 14-25 illustrate and example embodiment of the GUI 100 being used to interactively construct another filter, in accordance with embodiments of the present technique. While this example is discussed in the context of a user interacting with the GUI 100 using a mouse as an input device 88, in other embodiments, other suitable input devices may be used, in accordance with the present disclosure. As illustrated in FIG. 14, the GUI 100 initially presents the table 104 that includes a data set 106 of CMDB data. The example begins with the GUI 100 receiving a selection input from the user of the column header 110D using the cursor 102. As illustrated in FIG. 15, in response, the GUI 100 generates a first floating tag 116A that is maintained below the cursor 102 as the GUI 100 receives a drag input, as indicated by the arrow 200, while the mouse button remains depressed.

As illustrated in FIG. 15, the filter section 118 has expanded from the bottom portion 126 of the GUI 100 as the first floating tag 116A is dragged in this direction. As such, it may be appreciated that, for such embodiments, the filter section 118 does not obscure the user's view of the table 104 in FIG. 14, improving use of screen real estate. Additionally, as seen in FIG. 15, an upper portion 202 of the filter section 118 is animated in a manner that responds to the approach of the first floating tag 116A, stretching out toward the tag 116A to intuitively suggest to the user to continue dragging the tag 116A into the filter section 118 for effect.

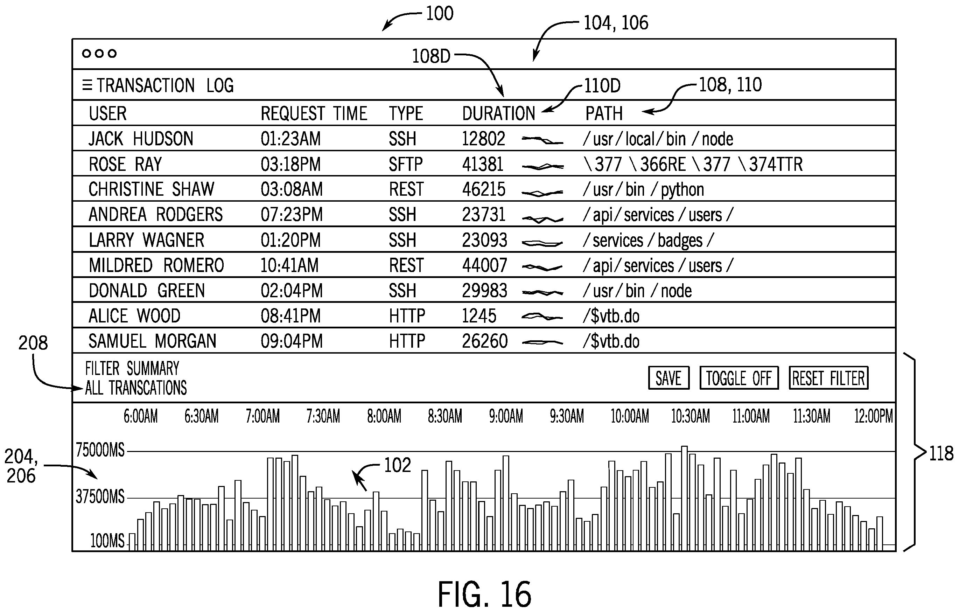

FIG. 16 illustrates the embodiment of the GUI 100 of FIG. 15, wherein the filter section 118 has been updated in response to receiving the drop input of the first floating tag 116A in the filter section 118. Similar to the example discussed above, in response to receiving the drop input of a floating tag for column heading 110D, the GUI 100 expands the filter section 118 to include a first filter portion 204 having the graphical representation 206 that presents values of the "Duration" column 108D over a window of time (e.g., 24 hours). However, since no other filter limitations have been applied, the first filter section 204 includes all transactions, as indicated in the text 208 of the filter section 118.

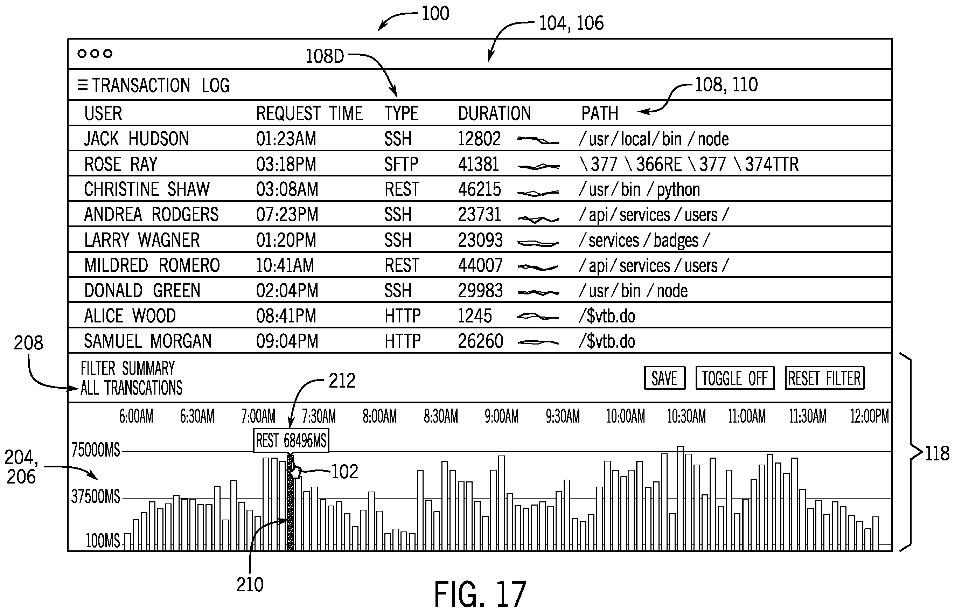

In certain embodiments, the graphical representation 206 in the filter section 118 of the GUI 100 can provide an interface that supplies both high-level trend data and enables access to detailed information within the data set. For example, as illustrated in FIG. 17, when the cursor 102 is positioned over a portion of the graphical representation 206 (e.g., a particular bar 210 of the bar graph), a tool tip 212 is temporarily presented indicating corresponding information (e.g., type, duration, user) regarding the particular portion of the graphical representation 206. This enables the user to be able to have a relatively unobscured of overall trends in the data for the selected column, while also being able to quickly drill down to determine information regarding particular data points. That is, using the graphical representation 206, a user can visualize a sharp increase in duration values at a particular time, and then quickly determine information related to this sharp increase to diagnose a particular issue. For the illustrated example, the user determines from the information in the tool tip 212 that records having a "REST" value in the "Type" column 108D may warrant further investigation.

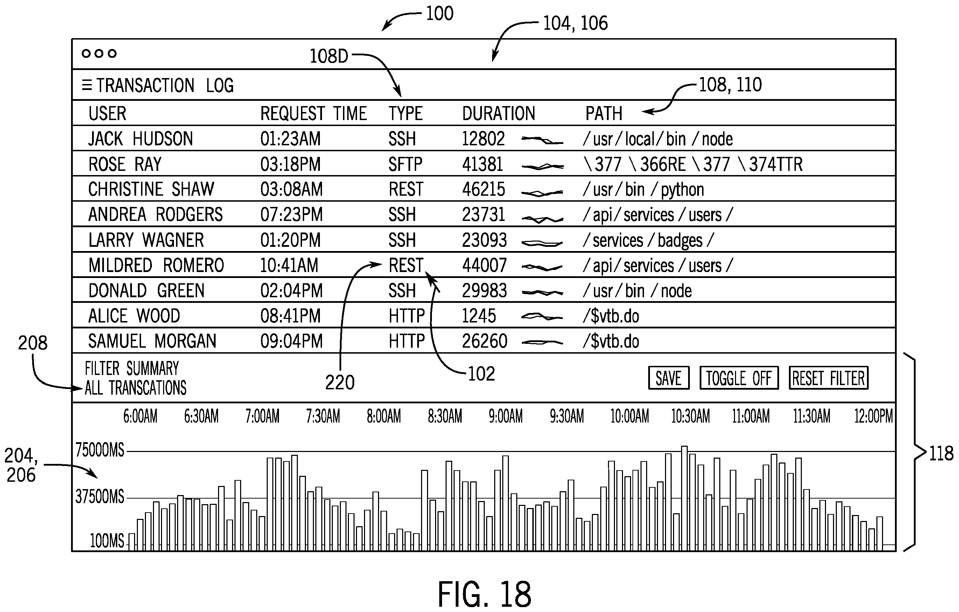

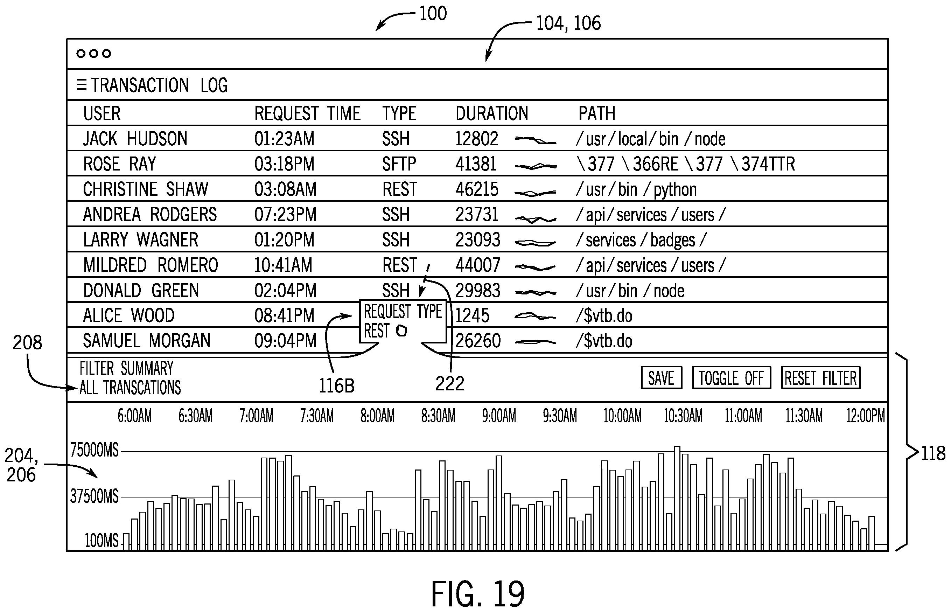

As such, in FIG. 18, the GUI 100 receives a selection input for a particular field 220 of the table 104 via the cursor 102. The particular field 220 is in the "Type" column 108D and has a value of "REST." Accordingly, as illustrated in FIG. 19, the GUI 100 generates, in response to the selection input, a second floating tag 116B that indicates that it represents a request type value of "REST". Additionally, as illustrated in FIG. 19, the GUI 100 receives a drag input, as indicated by the arrow 222, and the upper portion 202 of the filter section 118 again stretches toward the advancing floating tag 116B to intuitively guide the user.

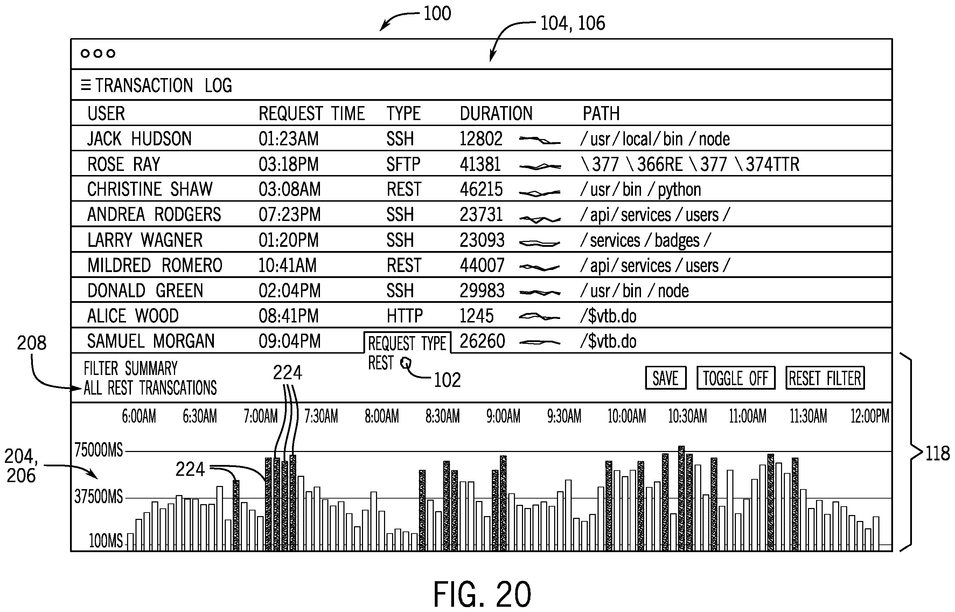

In certain embodiments, as illustrated in FIG. 20, when the GUI 100 receives the drag input indicating that the second floating tag 116B is within the filter section 118, and before the GUI 100 receives a corresponding drop input, the graphical representation 206 may be updated to highlight the particular data that is being filtered from the graphical representation 206 in response to the updated filter limitations. For the illustrated example, since the second floating tag 116B represents records having a "Type" value of "REST," all of the bars 224 in the graphical representation 206 that represent "REST" requests are highlighted using a different color or shade. This provides the user an opportunity to preview this portion of the filter operation, to determine that the operation is not desired, and to avoid the drop input of the second floating tag 116D in the filter section 118.

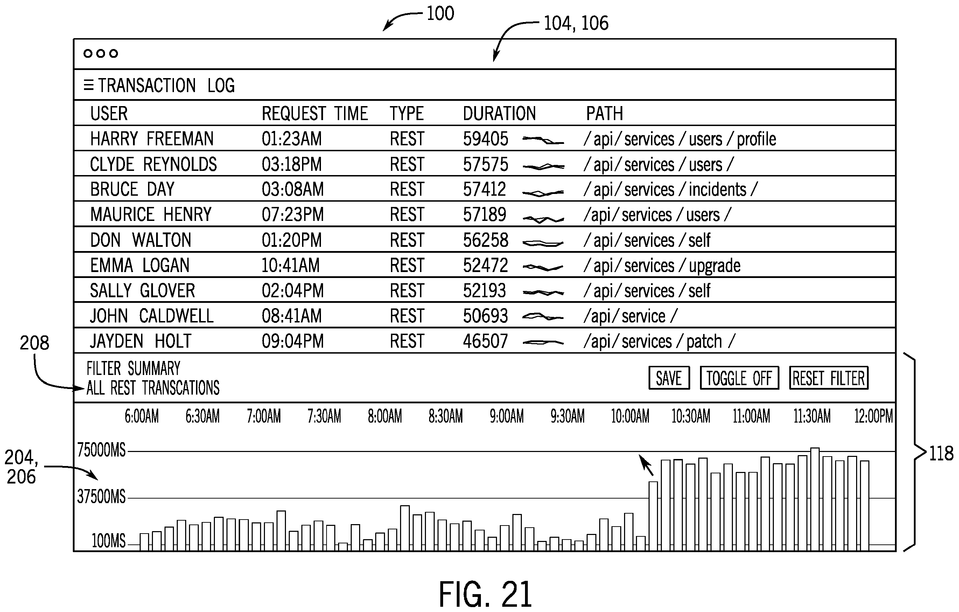

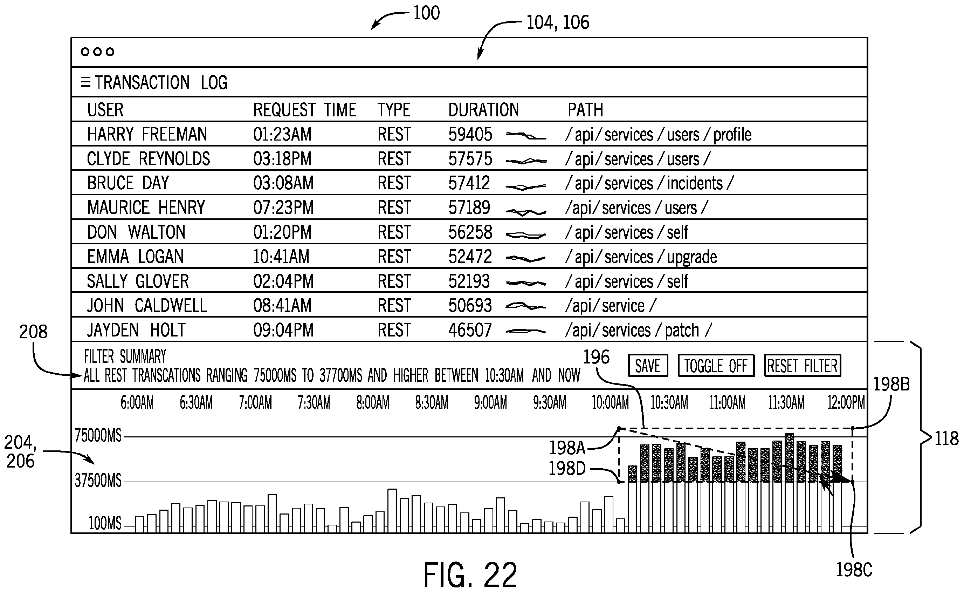

For the illustrated example, once the user has visually verified the operation and indicates a desire to continue by releasing the mouse button while the cursor 102 is in the filter section 118, the filter is updated to include a limitation for records having a "Type" value of "REST," as illustrated in FIG. 21. Additionally, the illustrated graphical representation 206 enables the addition of time and/or duration limitations to the filter being constructed. For example, FIG. 22 illustrates the embodiment of the GUI 100 of FIG. 21 after receiving a start selection input (e.g., a mouse button being pressed), a drag input (e.g., a movement of the mouse with the button depressed, as indicated by the arrow 226), and an end selection input (e.g., a release of the mouse button). This operation defines a rectangle 196 having corners 198 (e.g., corner 198A, 198B, 198C, and 198D) whose (x, y) coordinates establish the limits for the filter. For the illustrated example, this adds a filter limitation based on time and duration, such that the filter returns only record that are associated with a time between 10:30AM and now, having a duration of between 75000 ms and 37700 ms, and having a "Type" of "REST," as indicated by the text 208 in the filter section 118.

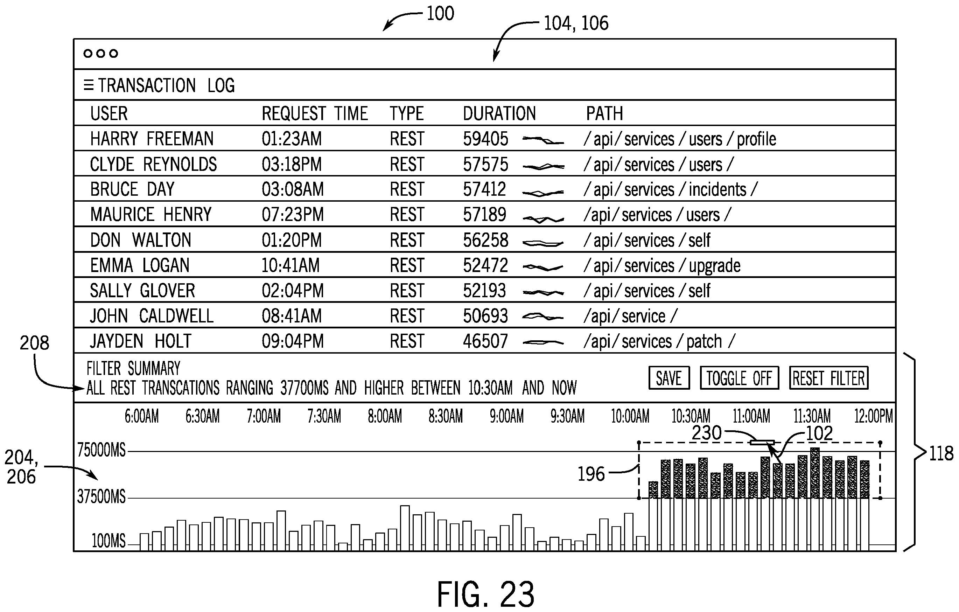

In certain embodiments, the graphical representation 206 of the filter section 118 may accept adjustment inputs (e.g., one or more selection, dragging, and dropping motions) to adjust the limitations of the filter. For example, FIG. 23 illustrates the embodiment of the GUI 100 of FIG. 22, wherein the rectangle 196 is configured to receive an adjustment input at a side 230 to adjust the bounds of the numerical limits. For the illustrated embodiment, in response to receiving the adjustment input at the side 230 of the rectangle 196 via the cursor 102, the rectangle 196 has expanded in height (e.g., in the y-direction) to extend beyond the highest duration value illustrated in the graphical representation 206 over the indicated time period. Additionally, the text 208 of the filter section has been updated to indicate that the filter now returns records of the data set having a value of "REST" in the "Type" column, having a time between 10:30AM and now, having of duration 37700 ms or greater.

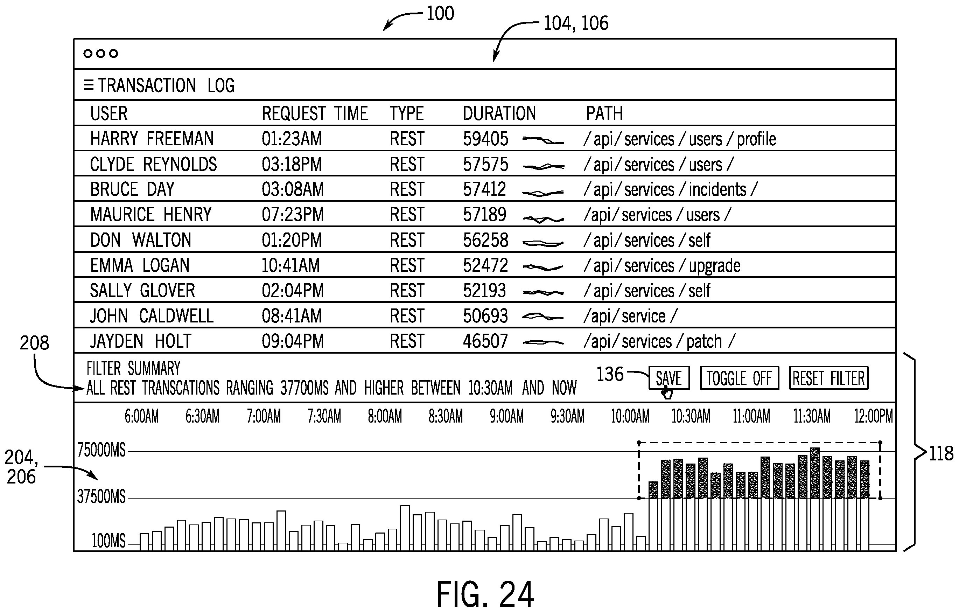

As illustrated in FIG. 24, the GUI 100 then receives a selection input via the "Save" button 136, indicating that the user desires to save the filter for later access or further use. It may be appreciated that, once saved, when the filter is later accessed (e.g., from a list of saved filters), then the GUI 100 may again present the save filter as illustrated in FIG. 24. In response to receiving the selection input via the "Save" button 136, the GUI 100 presents the pop-up dialog 240 illustrated in FIG. 25. The pop-up dialog 240 includes a text box 242 that designed to receive input from a keyboard or similar input device. For the illustrated example, the text box 242 has received input indicating a desired name of "Slow REST calls." The pop-up dialog 240 also includes a "Name & Save" button 244 and, in response to a selection input via this button, the GUI 100 causes the filter to be saved in a suitable memory (e.g., memory 86) of the platform 20 for later retrieval and use. The pop-up dialog 240 additionally includes a "Create Widget & Save" button 246, and in response to a selection input via this button, the GUI 100 causes the filter to be saved, and further generates a widget based on the filter.

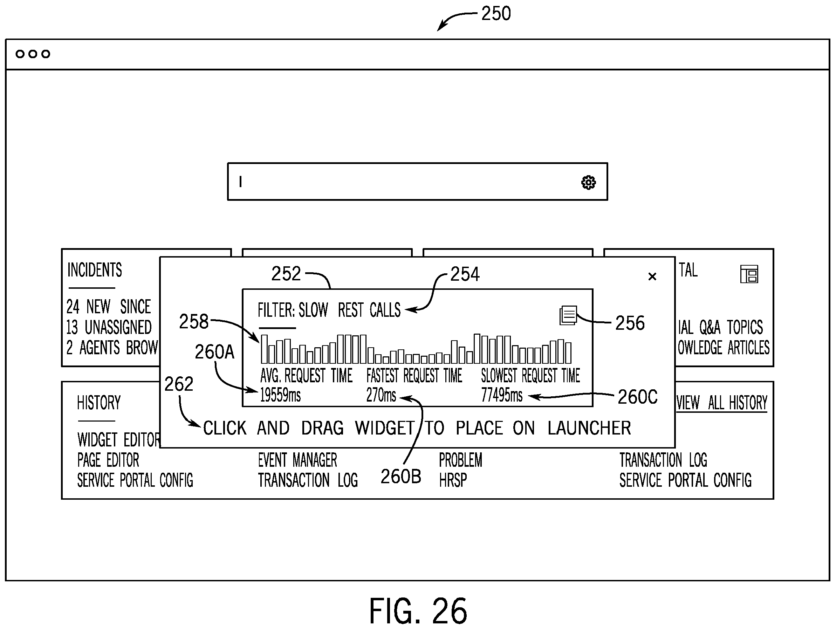

FIGS. 26-28 illustrate an example of a launcher GUI 250 associated with the client instance 42 and the platform 20, in accordance with embodiments of the present approach. For example, the launcher GUI 250 may be a first screen or home screen that is presented on a client device when a client logs onto the client instance 42. The launcher GUI 250 illustrated in FIG. 26 is overlaid with a new widget 252 generated based on the filter created in the example of FIGS. 14-25, in response to the GUI 100 receiving a selection input via the "Create Widget & Save" button 246.

As illustrated in FIG. 26, the widget 252 includes the filter name 254, as discussed with respect to FIG. 25. The widget 252 includes a button 256 and, in response to receiving a selection input via this button, the GUI 100 illustrated in FIG. 24 may be presented to the user, enabling the user to view the details of the records in the data set associated with the filter. The widget 252 includes a graphical representation 258 (e.g., a miniaturized graphical representation) of a data set returned by the filter that, for the illustrated example, includes CMDB records having a value of "REST" in the "Type" column, having a time between 10:30AM and the present loading of the widget 252, having of duration 37700 ms or greater. The widget 252 also includes statistical values 260 that are determined by the GUI 250 with based on the data set, including an average request duration value 260A, a fastest request duration value 260B, and a slowest request duration value 260C. Additionally, the widget 252 is updated (e.g., continuously, intermittently) based on changes to the underlying CMDB data, for example, due to events occurring on the client network 12. As such, the graphical representation 258 and the statistical values 260 of the widget are updated to reflect new and updating data in the CMDB database for records that meet the limitations of the filter.

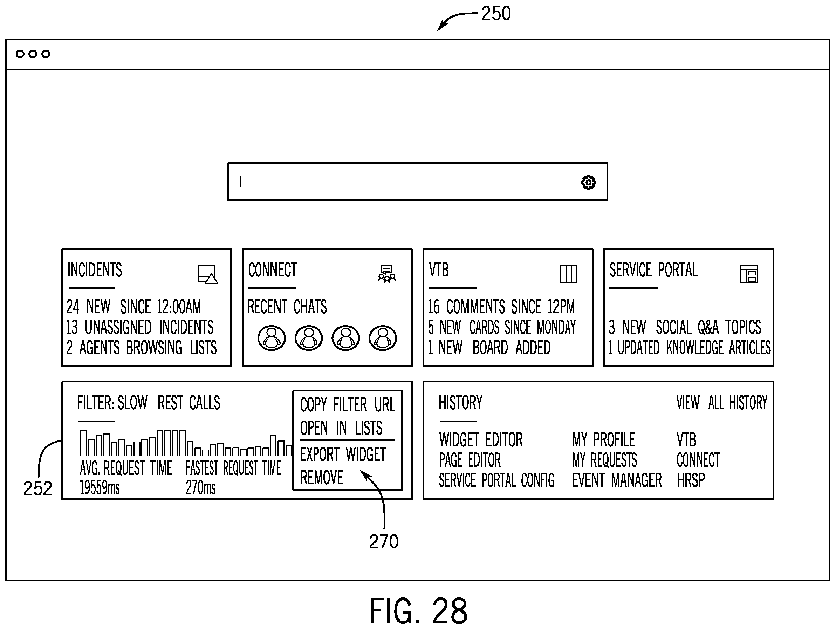

In FIG. 26, the GUI 250 also includes text 262 directing the user to drag the widget 252 to place it on the launcher GUI 250. FIG. 26 illustrates an updated launcher GUI 250 that is generated in response to receiving selection, drag, and drop inputs to position the widget 252 on the launcher GUI 250. Additionally, as illustrated in FIG. 28, the widget 252 may be configured to receive a secondary selection input (e.g., a right mouse click) to provide different options for managing the widget 252. Among other widget related features, the illustrated pop-up menu 270 in FIG. 28 is designed to receive a selection input to copy a Uniform Resource Locator (URL) that links to the saved filter, such that the underlying filter can be quickly sent to a colleague via email or an internal messaging system. As such, it is envisioned that these widgets can easily be traded amongst different users, none of whom require intimate knowledge of underlying table structure or query languages to use the filter widget. For example, in certain embodiments, a first user may create a new filter, save the filter, and create a widget based on the filter, as discussed above. In such cases, the filter may be saved to a list of available widgets in a centralized widget library, from which users can select any suitable number of widgets created by other users. In other cases, after creating the widget, a first user may inform a second user about the widget, and when the second user is associated with a suitable role (e.g., a workspace administrator), then the second user may add the widget to a dock or ribbon associated with a suitable portion of the user interface (e.g., a workspace).

The specific embodiments described above have been shown by way of example The extent of protection shall be determined by the claims. Nevertheless, the description and drawings shall be used to interpret the claims.

## Claims

1. A computing system (80), comprising:
a configuration management database, CMDB, configured to store activity related to a managed client network (12);
a graphical user interface, GUI, (100) configured to be executed by a processor (82) of the computing system, wherein the computing system is configured to perform actions comprising:
presenting a data set from the CMDB on a table (104) of the GUI (100), wherein the table comprises a column (108) for each field (114) of the data set and a row (112) for each record of the data set;
receiving a selection input indicative of a particular field (114) of a particular row (112) or a particular column heading (110) of a particular column (108) from the table (104) of the GUI (100);
receiving a drag input indicative of the particular field (114) or the particular column heading (110) being dragged to a filter section (118) of the GUI (100);
receiving a drop input indicative of the particular field (114) or the particular column heading (110) being dropped into the filter section (118) of the GUI (100);
creating, in response to the drop input, a filter based on a value of the particular field (114) or values of the particular column (108) and visually presenting the filter in the filter section (118);
initiating, in response to the drop input, a filter operation on the data set to generate a filtered data set using the filter; and
presenting the filtered data set on the table of the GUI (100).

2. The system of claim 1, wherein the computing system (80) is configured to perform actions comprising:
receiving a second selection of a second particular field (114) of a second particular row (112) or a second particular column heading (110) of a second particular column (108) from the table (104) of the GUI (100);
receiving a second drag interaction input indicative of the second particular field (114) or the second particular column heading (110) being dragged to the filter section (118) of the GUI (100);
receiving a second drop interaction input indicative of the second particular field (114) or the second particular column heading (110) being dropped into the filter section (118) of the GUI (100);
update, in response to the second drop input, the filter based on a value of the second particular field (114) or values of the second particular column (108) and visually presenting the modified filter in the filter section (118);
initiating, in response to the second drop interaction input, a second filter operation on the data set using the modified filter to generate a second filtered data set; and
presenting the second filtered data set on the table (104) of the GUI (100).

3. The system of claim 1, wherein, to visually present the filter in the filter section (118), the computing system (80) configured to perform actions comprising:
presenting, in the filter section of the GUI, at least one icon (132, 172) in response to the drop input.

4. The system of claim 3, wherein the selection input indicative of the particular field (114) of the particular row is received, and wherein the at least one icon is a single icon (132) that corresponds to the value of the particular field.

5. The system of claim 3, wherein the selection input indicative of the particular column heading (110) of the particular column is received, and wherein the at least one icon is a plurality of icons (172) representing distinct values present within the particular column (108).

6. The system of claim 3, wherein the at least one icon (172) includes a remove filter feature, and wherein, in response to receiving input via the remove filter feature, the computing system (80) is configured to perform actions comprising:
initiating a remove filter operation on the data set to generate a modified data set based on the received input; and
presenting the modified data set on the table (104) of the GUI (100).

7. The system of claim 1, wherein the filter section (118) of the GUI (100) comprises a toggle filter button (138), wherein the computing system is configured to perform actions comprising:
presenting the data set on the table (104) of the GUI (100) in response to receiving a toggle off input via the toggle filter button (138); and
presenting the filtered data set on the table (104) of the GUI (100) in response to receiving a toggle on input via the toggle filter button (138).

8. The system of claim 1, wherein the filter section (118) of the GUI (100) comprises a save filter button (136), and wherein, in response to receiving input via the save filter button (136), the computing system (80) is configured to perform actions comprising:
presenting a dialog box (240) comprising a filter name field (242), a save button (244), and a create widget and save button (246);
saving the filter in memory (86) of the computing system (80) based on the received selection input, the drag input, and the drop input of the particular field (114) or the particular column heading (110); and
in response to receiving input via the create widget and save button (246) from the dialog box (240), creating a widget (252) based on the filter, wherein the widget is configured to be presented on a launcher GUI (100).

9. A method of operating a graphical user interface, GUI, (100) associated with a configuration management database, CMDB, the method comprising:
presenting a data set from the CMDB on a table (104) of the GUI (100), wherein the table (104) comprises a column (108) for each field of the data set and a row (112) for each record of the data set;
receiving a selection input of a particular field (114) of a particular row (112) or a particular column heading (110) of a particular column (108) from the table (104) of the GUI (100);
receiving a drag interaction input and a drop interaction input indicative of the particular field (114) or the particular column heading (110) being dragged and dropped to a filter section (118) of the GUI (100);
creating, in response to the drop interaction input, a filter based on a value of the particular field (114) or values of the particular column (108) and visually presenting the filter in the filter section (118);
filtering, in response to the drop interaction input, the data set to generate a filtered data set based on the filter; and
presenting the filtered data set on the table (104) of the GUI (100).

10. The method of claim 9, wherein visually presenting the filter in the filter section comprises: presenting, in the filter section (118) of the GUI (100), at least one icon (132, 172) in response to the drop interaction input.

11. The method of claim 10, wherein the selection input of the particular column heading (110) of the particular column (108) is received and the at least one icon is a plurality of icons (172) representing distinct values present within the particular column (108).

12. The method of claim 9, comprising:
receiving a second selection input of a second particular field (114) of a second particular row (112) or a second particular column heading (110) of a second particular column (108) from the table (104) of the GUI (100);
receiving a second drag interaction input indicative of the second particular field (114) or the second particular column heading (110) being dragged to the filter section (118) of the GUI (100);
receiving a second drop interaction input indicative of the second particular field (114) or the second particular column heading (110) being dropped into the filter section (118) of the GUI (100);
updating, in response to the second drop interaction input, the filter based on a value of the second particular field (114) or values of the second particular column (108) and visually presenting the modified filter in the filter section (118) of the GUI (100);
initiating, in response to the second drop interaction input, a second filter operation on the data set to generate a second filtered data set using the modified filter; and
presenting the second filtered data set on the table (104) of the GUI (100).

13. A non-transitory, computer-readable medium storing instructions executable by a processor (82) of a computing system (80) to provide a graphical user interface, GUI, (100) associated with a configuration management database, CMDB, the instructions comprising:
instructions to present a data set from the CMDB on a table (104) of the GUI (100), wherein the table (104) comprises a column (108) for each field of the data set and a row (112) for each record of the data set;
instructions to receive a selection input of a particular field (114) of a particular row (112) or a particular column heading (110) of a particular column (108) from the table (104) of the GUI (100);
instructions to receive a drag interaction input and a drop interaction input indicative of the particular field (104) or the particular column heading (110) being dragged and dropped to a filter section (118) of the GUI (100);
instructions to create, in response to the drop interaction input, a filter based on a value of the particular field (114) or values of the particular column (108) and to visually present the filter in the filter section (118);
instructions to filter, in response to the drop interaction input, the data set to generate a filtered data set using the filter; and
instructions to present the filtered data set on the table (104) of the GUI (100).

14. The medium of claim 13, wherein the selection input of the particular column heading (110) of the particular column (108) is received, and the instructions comprise:
instructions to present, in the filter section (118), a graphical representation (182) of data from the particular column (108), wherein the graphical representation is a graph indicating trends in the data from the particular column (108) over time.

15. The medium of claim 14, comprising:
instructions to receive, via the graphical representation, a selection of a first value (198A) and a second value (198C);
instructions to update the graphical representation (182) to only present the data from the particular column (108) that is in a range defined by the first and second values (198A, 198C);
instructions to modify, in response to the selection, the filter based on the particular column heading (110) and the range defined by the first and second values (198A, 198C);
instructions to filter the data set to generate a second filtered data set using the modified filter; and
instructions to present the second filtered data set on the table (104) of the GUI (100).

## Patentansprüche

1. Verarbeitung-System (80), umfassend:
eine Konfiguration-Verwaltung-Datenbank, CMDB, welche dazu eingerichtet ist, eine Aktivität bezüglich eines verwalteten Klienten-Netzwerks (12) zu speichern;
eine grafische Benutzer-Schnittstelle, GUI, (100), welche dazu eingerichtet ist, durch einen Prozessor (82) des Verarbeitung-Systems ausgeführt zu werden, wobei das Verarbeitung-System dazu eingerichtet ist, Handlungen durchzuführen, umfassend:
Darstellen eines Daten-Satzes von der CMDB an einer Tabelle (104) der GUI (100), wobei die Tabelle eine Spalte (108) für jedes Feld (114) des Daten-Satzes und eine Zeile (112) für jede Aufnahme des Daten-Satzes umfasst;
Empfangen einer Auswahl-Eingabe, welche ein bestimmtes Feld (114) einer bestimmten Zeile (112) oder eine bestimmte Spalten-Überschrift (110) einer bestimmten Spalte (108) von der Tabelle (104) der GUI (100) anzeigt;
Empfangen einer Zug-Eingabe, welche anzeigt, dass das bestimmte Feld (114) oder die bestimmte Spalten-Überschrift (110) zu einem Filter-Abschnitt (118) der GUI (100) gezogen wird;
Empfangen einer Ablage-Eingabe, welche anzeigt, dass das bestimmte Feld (114) oder die bestimmte Spalten-Überschrift (110) in den Filter-Abschnitt (118) der GUI (100) abgelegt worden ist;
Erzeugen, in Reaktion auf die Ablage-Eingabe, eines Filters auf Grundlage eines Wertes des bestimmten Feldes (114) oder von Werten der bestimmten Spalte (108) und visuelles Darstellen des Filters in dem Filter-Abschnitt (118);
Initiieren, in Reaktion auf die Ablage-Eingabe, einer Filter-Operation auf den Daten-Satz, um einen gefilterten Daten-Satz unter Verwendung des Filters zu erzeugen; und
Darstellen des gefilterten Daten-Satzes an der Tabelle der GUI (100).

2. System nach Anspruch 1, wobei das Verarbeitung-System (80) dazu eingerichtet ist, Handlungen durchzuführen, umfassend:
Empfangen einer zweiten Auswahl eines zweiten bestimmten Feldes (114) einer zweiten bestimmten Zeile (112) oder einer zweiten bestimmten Spalten-Überschrift (110) einer zweiten bestimmten Spalte (108) von der Tabelle (104) der GUI (100);
Empfangen einer zweiten Zug-Interaktion-Eingabe, welche anzeigt, dass das zweite bestimmte Feld (114) oder die zweite bestimmte Spalten-Überschrift (110) zu dem Filter-Abschnitt (118) der GUI (100) gezogen wird;
Empfangen einer zweiten Ablage-Interaktion-Eingabe, welche anzeigt, dass das zweite bestimmte Feld (114) oder die zweite bestimmte Spalten-Überschrift (110) in den Filter-Abschnitt (118) der GUI (100) abgelegt worden ist;
Aktualisieren, in Reaktion auf die zweite Ablage-Eingabe, des Filters auf Grundlage eines Wertes des zweiten bestimmten Feldes (114) oder von Werten der zweiten bestimmten Spalte (108) und visuelles Darstellen des modifizierten Filters in dem Filter-Abschnitt (118);
Initiieren, in Reaktion auf die zweite Ablage-Interaktion-Eingabe, einer zweiten Filter-Operation an dem Daten-Satz unter Verwendung des modifizierten Filters, um einen zweiten gefilterten Daten-Satz zu erzeugen; und
Darstellen des zweiten gefilterten Daten-Satzes an der Tabelle (104) der GUI (100).

3. System nach Anspruch 1, wobei, um den Filter in dem Filter-Abschnitt (118) visuell darzustellen, das Verarbeitung-System (80) dazu eingerichtet ist, Handlungen durchzuführen, umfassend:
Darstellen in dem Filter-Abschnitt der GUI wenigstens eines Symbols (132, 172) in Reaktion auf die Ablage-Eingabe.

4. System nach Anspruch 3, wobei die Auswahl-Eingabe, welche das bestimmte Feld (114) der bestimmten Zeile anzeigt, empfangen worden ist, und wobei das wenigstens eine Symbol ein einzelnes Symbol (132) ist, welches dem Wert des bestimmten Feldes entspricht.

5. System nach Anspruch 3, wobei die Auswahl-Eingabe, welche die bestimmte Spalten-Überschrift (110) der bestimmten Spalte anzeigt, empfangen worden ist, und wobei das wenigstens eine Symbol eine Mehrzahl von Symbolen (172) ist, welche unterschiedliche Werte anzeigen, welche innerhalb der bestimmten Spalte (108) dargestellt sind.

6. System nach Anspruch 3, wobei das wenigstens eine Symbol (172) ein Entfernung-Filter-Merkmal umfasst, und wobei, in Reaktion auf ein Empfangen einer Eingabe über das Entfernung-Filter-Merkmal, das Verarbeitung-System (80) dazu eingerichtet ist, Handlungen durchzuführen, umfassend:
Initiieren einer Entfernung-Filter-Operation an dem Daten-Satz, um einen modifizierten Daten-Satz auf Grundlage der empfangenen Eingabe zu erzeugen; und
Darstellen des modifizierten Daten-Satzes an der Tabelle (104) der GUI (100).

7. System nach Anspruch 1, wobei der Filter-Abschnitt (118) der GUI (100) einen Umschalt-Filter-Knopf (138) umfasst, wobei das Verarbeitung-System dazu eingerichtet ist, Handlungen durchzuführen, umfassend:
Darstellen des Daten-Satzes an der Tabelle (104) der GUI (100) in Reaktion auf ein Empfangen einer Abschalt-Eingabe über den Umschalt-Filter-Knopf (138); und
Darstellen des gefilterten Daten-Satzes an der Tabelle (104) der GUI (100) in Reaktion auf ein Empfangen einer Einschalt-Eingabe über den Umschalt-Filter-Knopf (138).

8. System nach Anspruch 1, wobei der Filter-Abschnitt (118) der GUI (100) einen Speicher-Filter-Knopf (136) umfasst, und wobei, in Reaktion auf ein Empfangen einer Eingabe über den Speicher-Filter-Knopf (136), das Verarbeitung-System (80) dazu eingerichtet ist, Handlungen durchzuführen, umfassend:
Darstellen einer Dialog-Box (240), umfassend ein Filter-Namen-Feld (242), einen Speicher-Knopf (244) und einen Erzeuge-Widget und Speicher-Knopf (246);
Speichern des Filters in einem Speicher (86) des Verarbeitung-Systems (80) auf Grundlage der empfangenen Auswahl-Eingabe, der Zug-Eingabe und der Ablage-Eingabe des bestimmten Feldes (114) oder der bestimmten Spalten-Überschrift (110); und
in Reaktion auf ein Empfangen einer Eingabe über den Erzeuge-Widget und Speicher-Knopf (246) von der Dialog-Box (240), Erzeugen eines Widgets, (252) auf Grundlage des Filters, wobei das Widget dazu eingerichtet ist, an einer Start-GUI (110) dargestellt zu werden.

9. Verfahren eines Betreibens einer grafischen Benutzer-Schnittstelle, GUI, (100), welche einer Konfiguration-Verwaltung-Datenbank, CMDB, zugeordnet ist, wobei das Verfahren umfasst:
Darstellen eines Daten-Satzes von der CMDB an einer Tabelle (104) der GUI (100), wobei die Tabelle (104) eine Spalte (108) für jedes Feld des Daten-Satzes und eine Zeile (112) für jede Aufnahme des Daten-Satzes umfasst;
Empfangen einer Auswahl-Eingabe eines bestimmten Feldes (114) einer bestimmten Zeile (112) oder einer bestimmten Spalten-Überschrift (110) einer bestimmten Spalte (108) von der Tabelle (104) der GUI (100);
Empfangen einer Zug-Interaktion-Eingabe und einer Ablage-Interaktion-Eingabe, welche anzeigen, dass das bestimmte Feld (114) oder die bestimmte Spalten-Überschrift (110) zu einem Filter-Abschnitt (118) der GUI (100) gezogen und abgelegt wird;
Erzeugen, in Reaktion auf die Ablage-Interaktion-Eingabe, eines Filters auf Grundlage eines Wertes des bestimmten Feldes (114) oder von Werten der bestimmten Spalte (108) und visuelles Darstellen des Filters in dem Filter-Abschnitt (118);
Filtern, in Reaktion auf die Ablage-Interaktion-Eingabe, des Daten-Satzes, um einen gefilterten Daten-Satz auf Grundlage des Filters zu erzeugen; und
Darstellen des gefilterten Daten-Satzes an der Tabelle (104) der GUI (100).

10. Verfahren nach Anspruch 9, wobei das visuelle Darstellen des Filters in dem Filter-Abschnitt (118) umfasst:
Darstellen in dem Filter-Abschnitt (118) der GUI (100) wenigstens eines Symbols (132, 172) in Reaktion auf die Ablage-Interaktion-Eingabe.

11. Verfahren nach Anspruch 10, wobei die Auswahl-Eingabe der bestimmten Spalten-Überschrift (110) der bestimmten Spalte (108) empfangen wird und das wenigstens eine Symbol eine Mehrzahl von Symbolen (172) ist, welche unterschiedliche Werte repräsentieren, welche innerhalb der bestimmten Spalte (108) dargestellt sind.

12. Verfahren nach Anspruch 9, umfassend:
Empfangen einer zweiten Auswahl-Eingabe eines zweiten bestimmten Feldes (114) einer zweiten bestimmten Zeile (112) oder einer zweiten bestimmten Spalten-Überschrift (110) einer zweiten bestimmten Spalte (108) von der Tabelle (104) der GUI (100);
Empfangen einer zweiten Zug-Interaktion-Eingabe, welche anzeigt, dass das zweite bestimmte Feld (114) oder die zweite bestimmte Spalten-Überschrift (110) zu dem Filter-Abschnitt (118) der GUI (100) gezogen wird;
Empfangen einer zweiten Ablage-Interaktion-Eingabe, welche anzeigt, dass das zweite bestimmte Feld (114) oder die zweite bestimmte Spalten-Überschrift (110) in den Filter-Abschnitt (118) der GUI (100) abgelegt wird;
Aktualisieren, in Reaktion auf die zweite Ablage-Interaktion-Eingabe, des Filters auf Grundlage eines Wertes des zweiten bestimmten Feldes (114) oder von Werten der zweiten bestimmten Spalte (108) und visuelles Darstellen des modifizierten Filters in dem Filter-Abschnitt (118) der GUI (100);
Initiieren, in Reaktion auf die zweite Ablage-Interaktion-Eingabe, einer zweiten Filter-Operation an dem Daten-Satz unter Verwendung des modifizierten Filters, um einen zweiten gefilterten Daten-Satz zu erzeugen; und
Darstellen des zweiten gefilterten Daten-Satzes an der Tabelle (104) der GUI (100).

13. Nicht-flüchtiges Computer-lesbares Speichermedium, welches Anweisungen speichert, welche durch einen Prozessor (82) eines Verarbeitung-Systems (80) ausführbar sind, um eine grafische Benutzer-Schnittstelle, GUI, (100) bereitzustellen, welche einer Konfiguration-Verwaltung-Datenbank, CMDB, zugeordnet ist, wobei die Anweisungen umfassen:
Anweisungen, um einen Daten-Satz von der CMDB an einer Tabelle (104) der GUI (100) darzustellen, wobei die Tabelle eine Spalte (108) für jedes Feld des Daten-Satzes und eine Zeile (112) für jede Aufnahme des Daten-Satzes umfasst;
Anweisungen, um eine Auswahl-Eingabe eines bestimmten Feldes (114) einer bestimmten Zeile (112) oder einer bestimmten Spalten-Überschrift (110) einer bestimmten Spalte (108) von der Tabelle (104) der GUI (100) zu empfangen;
Anweisungen, um eine Zug-Interaktion-Eingabe und eine Ablage-Interaktion-Eingabe zu empfangen, welche anzeigen, dass das bestimmte Feld (114) oder die bestimmte Spalten-Überschrift (110) zu einem Filter-Abschnitt (118) der GUI (100) gezogen und abgelegt werden;
Anweisungen, um, in Reaktion auf die Ablage-Interaktion-Eingabe,
einen Filter auf Grundlage eines Wertes des bestimmten Feldes (114) oder von Werten der bestimmten Spalte (108) zu erzeugen und um visuell den Filter in dem Filter-Abschnitt (118) darzustellen;
Anweisungen, um, in Reaktion auf die Ablage-Interaktion-Eingabe, den Daten-Satz zu filtern, um einen gefilterten Daten-Satz unter Verwendung des Filters zu erzeugen; und
Anweisungen, um den gefilterten Daten-Satz an der Tabelle der GUI (100) darzustellen.

14. Medium nach Anspruch 13, wobei die Auswahl-Eingabe der bestimmten Spalten-Überschrift (110) der bestimmten Spalte (108) empfangen wird und die Anweisungen umfassen:
Anweisungen, um in dem Filter-Abschnitt (118) eine grafische Darstellung (182) der Daten von der bestimmten Spalte (108) darzustellen, wobei die grafische Darstellung ein Graph ist, welcher Entwicklungen in den Daten von der bestimmten Spalte (108) über die Zeit anzeigt.

15. Medium nach Anspruch 14, umfassend:
Anweisungen, um über die grafische Darstellung eine Auswahl eines ersten Werts (198A) und eines zweiten Werts (198C) zu empfangen;
Anweisungen, um die grafische Darstellung (182) zu aktualisieren, um nur die Daten von der bestimmten Spalte (108) darzustellen, welche in einem Bereich liegen, welcher durch die ersten und zweiten Werte (198A, 198C) definiert wird;
Anweisungen, um, in Reaktion auf die Auswahl, den Filter auf Grundlage der bestimmten Spalten-Überschrift (110) und des Bereichs zu modifizieren, welcher durch die ersten und zweiten Werte (198A, 198C) definiert wird;
Anweisungen, um den Daten-Satz zu filtern, um einen zweiten gefilterten Daten-Satz unter Verwendung des modifizierten Filters zu erzeugen; und
Anweisungen, um den zweiten gefilterten Daten-Satz an der Tabelle (104) der GUI (100) darzustellen.

## Revendications

1. Système informatique (80), comprenant :
une base de données de gestion de configurations, CMDB, configurée pour stocker une activité liée à un réseau client géré (12) ;
une interface d'utilisateur graphique, GUI, (100) configurée pour être exécutée par un processeur (82) du système informatique, où le système informatique est configuré pour effectuer des actions comprenant :
la présentation d'un ensemble de données de la CMDB sur une table (104) de la GUI (100), où la table comprend une colonne (108) pour chaque champ (114) de l'ensemble de données et une ligne (112) pour chaque enregistrement de l'ensemble de données ;
la réception d'une entrée de sélection indiquant un fichier particulier (114) d'une ligne particulière (112) ou un en-tête de colonne particulier (110) d'une colonne particulière (108) à partir de la table (104) de la GUI (100) ;
la réception d'une entrée de glissement indiquant le glissement du champ particulier (114) ou de l'en-tête de colonne particulier (110) vers une section de filtre (118) de la GUI (100) ;
la réception d'une entrée de dépôt indiquant le dépôt du champ particulier (114) ou de l'en-tête de colonne particulier (110) dans la section de filtre (118) de la GUI (100) ;
la création, en réponse à l'entrée de dépôt, d'un filtre sur la base d'une valeur du champ particulier (114) ou de valeurs de la colonne particulière (108) et la présentation visuelle du filtre dans la section de filtre (118) ;
le lancement, en réponse à l'entrée de dépôt, d'une opération de filtrage sur l'ensemble de données pour générer un ensemble de données filtrées en utilisant le filtre ; et
la présentation de l'ensemble de données filtrées sur la table de la GUI (100).

2. Système de la revendication 1, où le système informatique (80) est configuré pour effectuer les actions comprenant :
la réception d'une deuxième sélection d'un deuxième champ particulier (114) d'une deuxième ligne particulière (112) ou d'un deuxième en-tête de colonne particulier (110) d'une deuxième colonne particulière (108) à partir de la table (104) de la GUI (100) ;
la réception d'une deuxième entrée d'interaction de glissement indiquant le glissement du deuxième champ particulier (114) ou du deuxième en-tête de colonne particulier (110) vers la section de filtre (118) de la GUI (100) ;
la réception d'une deuxième entrée d'interaction de dépôt indiquant le dépôt du deuxième champ particulier (114) ou du deuxième en-tête de colonne particulier (110) dans la section de filtre (118) de la GUI (100) ;
la mise à jour, en réponse à la deuxième entrée de dépôt, du filtre sur la base d'une valeur du deuxième champ particulier (114) ou de valeurs de la deuxième colonne particulière (108) et la présentation visuelle du filtre modifié dans la section de filtre (118) ;
le lancement, en réponse à la deuxième entrée d'interaction de dépôt, d'une deuxième opération de filtrage sur l'ensemble de données en utilisant le filtre modifié pour générer un deuxième ensemble de données filtrées ; et
la présentation du deuxième ensemble de données filtrées sur la table (104) de la GUI (100).

3. Système de la revendication 1, où, pour présenter visuellement le filtre dans la section de filtre (118), le système informatique (80) est configuré pour effectuer des actions comprenant :
la présentation, dans la section de filtre de la GUI, d'au moins une icône (132, 172) en réponse à l'entrée de dépôt.

4. Système de la revendication 3, dans lequel l'entrée de sélection indiquant le champ particulier (114) de la ligne particulière est reçue, et dans lequel l'au moins une icône est une icône unique (132) qui correspond à la valeur du champ particulier.

5. Système de la revendication 3, dans lequel l'entrée de sélection indiquant l'en-tête de colonne particulier (110) de la colonne particulière est reçue, et dans lequel l'au moins une icône est une pluralité d'icônes (172) représentant des valeurs distinctes présentes dans la colonne particulière (108).

6. Système de la revendication 3, dans lequel l'au moins une icône (172) comporte une fonction de suppression de filtre, et où, en réponse à la réception d'une entrée via la fonction de suppression de filtre, le système informatique (80) est configuré pour effectuer des actions comprenant :
le lancement d'une opération de suppression de filtre sur l'ensemble de données pour générer un ensemble de données modifiées sur la base de l'entrée reçue ; et
la présentation de l'ensemble de données modifiées sur la table (104) de la GUI (100).

7. Système de la revendication 1, dans lequel la section de filtre (118) de la GUI (100) comprend un bouton de bascule de filtre (138), où le système informatique est configuré pour effectuer des actions comprenant :
la présentation de l'ensemble de données sur la table (104) de la GUI (100) en réponse à la réception d'une entrée de désactivation via le bouton de bascule de filtre (138) ; et
la présentation de l'ensemble de données filtrées sur la table (104) de la GUI (100) en réponse à la réception d'une entrée d'activation via le bouton de bascule de filtre (138).

8. Système de la revendication 1, dans lequel la section de filtre (118) de la GUI (100) comprend un bouton de sauvegarde de filtre (136), et où, en réponse à la réception d'une entrée via le bouton de sauvegarde de filtre (136), le système informatique (80) est configuré pour effectuer des actions comprenant :
la présentation d'une boîte de dialogue (240) comprenant un champ de nom de filtre (242), un bouton de sauvegarde (244), et un bouton de création de gadget logiciel et de sauvegarde (246) ;
la sauvegarde du filtre dans une mémoire (86) du système informatique (80) sur la base de l'entrée de sélection reçue, de l'entrée de glissement, et de l'entrée de dépôt du champ particulier (114) ou de l'en-tête de colonne particulier (110) ; et
en réponse à la réception d'une entrée via le bouton de création de gadget logiciel et de sauvegarde (246) à partir de la boîte de dialogue (240), la création d'un gadget logiciel (252) sur la base du filtre, où le gadget logiciel est configuré pour être présenté sur une GUI lanceur (100).

9. Procédé de fonctionnement d'une interface d'utilisateur graphique, GUI, (100) associée à une base de données de gestion de configurations, CMDB, le procédé comprenant les étapes consistant à :
présenter un ensemble de données de la CMDB sur une table (104) de la GUI (100), où la table (104) comprend une colonne (108) pour chaque champ de l'ensemble de données et une ligne (112) pour chaque enregistrement de l'ensemble de données ;
recevoir une entrée de sélection d'un champ particulier (114) d'une ligne particulière (112) ou d'un en-tête de colonne particulier (110) d'une colonne particulière (108) à partir de la table (104) de la GUI (100) ;
recevoir une entrée d'interaction de glissement et une entrée d'interaction de dépôt indiquant le glissement et le dépôt du champ particulier (114) ou de l'en-tête de colonne particulier (110) vers et dans une section de filtre (118) de la GUI (100) ;
créer, en réponse à l'entrée d'interaction de dépôt, un filtre sur la base d'une valeur du champ particulier (114) ou de valeurs de la colonne particulière (108) et présenter visuellement le filtre dans la section de filtre (118) ;
filtrer, en réponse à l'entrée d'interaction de dépôt, l'ensemble de données pour générer un ensemble de données filtrées sur la base du filtre ; et
présenter l'ensemble de données filtrées sur la table (104) de la GUI (100).

10. Procédé de la revendication 9, dans lequel la présentation visuelle du filtre dans la section de filtre comprend : la présentation, dans la section de filtre (118) de la GUI (100), d'au moins une icône (132, 172) en réponse à l'entrée d'interaction de dépôt.

11. Procédé de la revendication 10, dans lequel l'entrée de sélection de l'en-tête de colonne particulier (110) de la colonne particulière (108) est reçue et l'au moins une icône est une pluralité d'icônes (172) représentant des valeurs distinctes présentes dans la colonne particulière (108).

12. Procédé de la revendication 9, comprenant les étapes consistant à :
recevoir une deuxième entrée de sélection à partir d'un deuxième champ particulier (114) d'une deuxième ligne particulière (112) ou d'un deuxième en-tête de colonne particulier (110) d'une deuxième colonne particulière (108) à partir de la table (104) de la GUI (100) ;
recevoir une deuxième entrée d'interaction de glissement indiquant le glissement du deuxième champ particulier (114) ou du deuxième en-tête de la colonne particulier (110) vers la section de filtre (118) de la GUI (100) ;
recevoir une deuxième entrée d'interaction de dépôt indiquant le dépôt du deuxième fichier particulier (114) ou du deuxième en-tête de colonne particulier (110) dans la section de filtre (118) de la GUI (100) ;
mettre à jour, en réponse à la deuxième entrée d'interaction de dépôt, le filtre sur la base d'une valeur du deuxième champ particulier (114) ou de valeurs de la deuxième colonne particulière (108) et présenter visuellement le filtre modifié dans la section de filtre (118) de la GUI (100) ;
lancer, en réponse à la deuxième entrée d'interaction de dépôt, une deuxième opération de filtrage sur l'ensemble de données pour générer un deuxième ensemble de données filtrées en utilisant le filtre modifié ; et
présenter le deuxième ensemble de données filtrées sur la table (104) de la GUI (100).

13. Support non transitoire, lisible par ordinateur stockant des instructions exécutables par un processeur (82) d'un système informatique (80) pour fournir une interface d'utilisateur graphique, GUI, (100) associée à une base de données de gestion de configurations, CMDB, les instructions comprenant :
des instructions pour présenter un ensemble de données de la CMDB sur une table (104) de la GUI (100), où la table (104) comprend une colonne (108) pour chaque champ de l'ensemble de données et une ligne (112) pour chaque enregistrement de l'ensemble de données ;
des instructions pour recevoir une entrée de sélection d'un champ particulier (114) d'une ligne particulière (112) ou d'un en-tête de colonne particulier (110) d'une colonne particulière (108) à partir de la table (104) de la GUI (100) ;
des instructions pour recevoir une entrée d'interaction de glissement et une entrée d'interaction de dépôt indiquant le glissement et le dépôt du champ particulier (104) ou de l'en-tête de colonne particulier (110) vers et dans une section de filtre (118) de la GUI (100) ;
des instructions pour créer, en réponse à l'entrée d'interaction de dépôt, un filtre sur la base d'une valeur du champ particulier (114) ou de valeurs de la colonne particulière (108) et pour présenter visuellement le filtre dans la section de filtre (118) ;
des instructions pour filtrer, en réponse à l'entrée d'interaction de dépôt, l'ensemble de données pour générer un ensemble de données filtrées en utilisant le filtre ; et
des instructions pour présenter l'ensemble de données filtrées sur la table (104) de la GUI (100).

14. Support de la revendication 13, dans lequel l'entrée de sélection de l'en-tête de colonne particulier (110) de la colonne particulière (108) est reçue, et les instructions comprennent :
des instructions pour présenter, dans la section de filtre (118), une représentation graphique (182) de données de la colonne particulière (108), où la représentation graphique est un graphique indiquant les tendances des données de la colonne particulière (108) au fil du temps.

15. Support de la revendication 14, comprenant :
des instructions pour recevoir, via la représentation graphique, une sélection d'une première valeur (198A) et d'une deuxième valeur (198C) ;
des instructions pour mettre à jour la représentation graphique (182) pour ne présenter que les données de la colonne particulière (108) qui sont dans une plage définie par les première et deuxième valeurs (198A, 198C) ;
des instructions pour modifier, en réponse à la sélection, le filtre sur la base de l'en-tête de colonne particulier (110) et de la plage définie par les première et deuxième valeurs (198A, 198C) ;
des instructions pour filtrer l'ensemble de données pour générer un deuxième ensemble de données filtrées en utilisant le filtre modifié ; et
des instructions pour présenter le deuxième ensemble de données filtrées sur la table (104) de la GUI (100).
